Europäisches Patentamt

European Patent Office

Office européen des brevets

(19)

(11) EP 0 934 359 B1

(12) **FASCICULE DE BREVET EUROPEEN**

(45) Date de publication et mention
de la délivrance du brevet:
**29.12.2004 Bulletin 2004/53**

(51) Int Cl.⁷: **C08L 67/07**, C09D 167/07

(21) Numéro de dépôt: **97909087.5**

(22) Date de dépôt: **24.10.1997**

(86) Numéro de dépôt international:
**PCT/BE1997/000124**

(87) Numéro de publication internationale:
**WO 1998/018862 (07.05.1998 Gazette 1998/18)**

(54) **COMPOSITIONS EN POUDRE A BASE DE POLYESTERS SEMI-CRISTALLINS ET DE POLYESTERS AMORPHES, CONTENANT DES GROUPES METHACRYLOYLE TERMINAUX**

PULVERZUSAMMENSETZUNGEN AUF BASIS VON TEILKRISTALLINEN POLYESTERN UND AMORPHEN POLYESTERN DIE METHACRYLENDGRUPPEN ENTHALTEN

POWDER COMPOSITIONS WITH SEMICRYSTALLINE POLYESTER AND AMORPHOUS POLYESTER BASE CONTAINING TERMINAL METHACRYLOYL GROUPS

(84) Etats contractants désignés:
**AT BE CH DE DK ES FI FR GB GR IE IT LI LU MC NL PT SE**

(30) Priorité: **25.10.1996 BE 9600905**

(43) Date de publication de la demande:
**11.08.1999 Bulletin 1999/32**

(73) Titulaire: **UCB, S.A.**
**1070 Bruxelles (BE)**

(72) Inventeurs:
• **MOENS, Luc**
**B-1640 Sint-Genesius-Rode (BE)**
• **LOUTZ, Jean-Marie**
**B-1180 Bruxelles (BE)**
• **MAETENS, Daniel**
**B-1080 Bruxelles (BE)**
• **LOSSEN, Patrick**
**B-2870 Ruisbrooek (BE)**
• **VAN KERCKHOVE, MARC**
**B-1457 Nil-Saint-Vincent (BE)**

(56) Documents cités:
**EP-A- 0 408 465        EP-A- 0 624 609**

## Description

La présente invention se rapporte à de nouvelles compositions en poudre durcissables par rayonnement comprenant un mélange d'au moins un polyester semi-cristallin contenant des groupes méthacryloyle terminaux et d'au moins un polyester amorphe contenant des groupes méthacryloyle terminaux, de même qu'à la préparation et aux utilisations desdites compositions.

Plus particulièrement. la présente invention concerne des compositions en poudre durcissables par irradiation ultraviolette ou par faisceaux d'électrons accélérés, dont le liant est constitué par un mélange d'au moins un polyester semi-cristallin contenant des groupes méthacryloyle terminaux et d'au moins un polyester amorphe contenant des groupes méthacryloyles terminaux, et qui se prêtent à la production d'enduits de peinture et de vernis présentant un ensemble unique de propriétés, entre autres une excellente dureté et flexibilité, d'excellentes propriétés mécaniques, une remarquable résistance aux solvants et aux intempéries, et une bonne stabilité au stockage.

Les compositions thermodurcissables en poudre sont bien connues dans l'état de la technique et sont largement utilisées comme peintures et vernis pour le revêtement d'objets les plus divers. Les avantages de ces poudres sont nombreux; d'une part les problèmes dus aux solvants sont complètement supprimés, d'autre part les poudres sont utilisées à 100%, dans la mesure où seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des accessoires de l'industrie automobile, du mobilier métallique, etc. Elles contiennent généralement des composés organiques thermodurcissables constituant le liant de la peinture, des charges, des pigments, des catalyseurs et des additifs divers pour adapter leur comportement à leur utilisation.

Il existe différents types de compositions thermodurcissables en poudre. Les compositions les plus connues contiennent comme liant, ou bien, un mélange de polyesters contenant des groupes carboxyle avec des composés époxydés, comme l'isocyanurate de triglycidyle ou des β-hydroxyalkylamides, ou encore, un mélange de polyesters contenant des groupes hydroxyle, avec des isocyanates bloqués ou non, des résines de mélamine ou de glycolurile, des anhydrides d'acides polycarboxyliques, etc.

A l'heure actuelle, la grande majorité des polyesters utilisés dans les compositions thermodurcissables en poudre sont des polyesters amorphes. Or, lorsque le polyester est amorphe, il est difficile de préparer des compositions thermodurcissables pulvérulentes parfaites, parce qu'elles doivent répondre à des critères souvent contradictoires. Ainsi, ces poudres ne peuvent pas se réagglomérer pendant leur manipulation, leur transport et leur stockage, ce qui implique que le polyester amorphe doit posséder une température de transition vitreuse (Tg) suffisamment élevée. D'un autre côté, pour que les particules de poudre puissent coalescer et former un enduit parfaitement homogène et uniforme, il faut que la température de transition vitreuse (Tg) du polyester soit suffisamment basse pour assurer une basse viscosité à l'état fondu qui, elle-même, assure un bon mouillage des pigments et autres matières solides accompagnant le polyester dans la formulation desdites compositions thermodurcissables en poudre.

De plus, la poudre doit être susceptible de fondre à la température de cuisson pour former un film régulier avant que ne commence la réaction de réticulation conduisant au durcissement final. Pour obtenir un bon étalement du film fondu sur la surface du substrat, il faut donc que la viscosité du polyester à l'état fondu soit suffisamment basse. En effet, une viscosité très élevée à l'état fondu empêche un bon étalement du film fondu et se traduit par une perte de la régularité et du brillant de l'enduit. Enfin, la vitesse de la réaction de réticulation de la composition ne peut être contrôlée qu'en faisant varier la température, ainsi que la quantité et/ou la nature de l'agent de réticulation et du catalyseur de réticulation éventuellement utilisé. Compte tenu de tous les impératifs qui précèdent, on admet généralement qu'un polyester amorphe convenable doit présenter une température de transition vitreuse (Tg) supérieure à 50°C mais inférieure à 85°C et une viscosité à l'état fondu comprise entre 100 et 10.000 mPa.s, mesurée à une température de 200°C, au viscosimètre cône/ plateau selon la norme ASTM D 4287-88.

Pour toutes ces raisons on ne recommande généralement pas de réaliser des enduits à partir des compositions à base de tels polyesters amorphes par cuisson à des températures au-dessous de 160°C pendant une durée d'environ 10 à 20 minutes. En effet, à des températures de cuisson plus basses, on obtient généralement des revêtements de moindre qualité et ayant des propriétés physiques insuffisantes. De plus, la difficulté que l'on rencontre dans le réglage d'une température de transition vitreuse (Tg) suffisamment élevée pour supprimer la tendance à la réagglomération au cours du stockage constitue un manque de souplesse pour l'utilisateur de la poudre.

Pour résoudre ces problèmes, on a proposé plus récemment des compositions thermodurcissables en poudre dont le liant est constitué par un polyester semi-cristallin contenant des groupes carboxyle ou des groupes hydroxyle. En effet, les propriétés des polyesters semi-cristallins permettent d'obvier dans une large mesure aux inconvénients précédemment décrits qu'amènent le réglage de la température de transition vitreuse (Tg), de la viscosité à l'état fondu et de la réactivité des polyesters amorphes.

Les polyesters semi-cristallins ont le plus souvent un point de fusion supérieur à 40°C et, une basse température de transition vitreuse (Tg) généralement inférieure à 30°C. Cela a pour conséquence que la viscosité à l'état fondu des polyesters semi-cristallins est très inférieure à celle des polyesters amorphes de poids moléculaire comparable couramment utilisés dans les compositions thermodurcissables en poudre.

Les compositions thermodurcissables à base de polyesters semi-cristallins ont déjà fait l'objet d'un certain nombre de publications sous forme d'articles et de brevets. Dans la littérature des brevets, on citera notamment la demande de brevet international PCT WO 91/14745, la demande de brevet européen 70.118, les brevets américains 4.352.924, 4.387.214, 4.937.288 et 4.973.646.

Les polyesters semi-cristallins et les compositions thermodurcissables en poudre préparés à partir de ceux-ci possèdent donc dans l'ensemble des propriétés plus avantageuses que les polyesters amorphes. Cependant, en dépit de leurs propriétés avantageuses, les polyesters semi-cristallins de l'état de la technique présentent aussi des inconvénients importants à l'échelle technique, même si ces polyesters semi-cristallins sont utilisés comme supplément pour modifier les polyesters amorphes classiques disponibles dans le commerce.

En premier lieu, les enduits obtenus à partir de telles compositions contenant des polyesters semi-cristallins présentent une faible dureté de surface (dureté au crayon HB). Ce défaut des polyesters semi-cristallins limite fortement les applications techniques des compositions contenant ces polyesters.

En second lieu, pour qu'ils soient durcissables à une température modérée, au moins 150°C en général, les polyesters requièrent la présence d'un agent de réticulation (composés époxydés, β-hydroxyalkylamides, etc.) et d'un catalyseur. Or, pour la préparation de la poudre, il faut fondre le polyester avec l'agent de réticulation, le catalyseur et les autres additifs dans une extrudeuse, à une température proche de la température de réticulation du système. Il s'ensuit que, sans précautions particulières, il se produit déjà lors de la préparation de la poudre une réticulation prématurée indésirable du liant par réaction entre le polyester et l'agent de réticulation. Une poudre ainsi préparée produit des revêtements défectueux, à cause de la présence de particules gélifiées et parce que, au moment où le film fondu doit s'étaler sur la surface du substrat à revêtir, au lieu de diminuer sous l'effet de la chaleur, sa viscosité augmente trop rapidement par réticulation prématurée pour obtenir un bon étalement, ce qui conduit à des malformations de l'enduit obtenu, telles que peau d'orange, etc.

En outre, la réticulation prématurée du liant peut, sans précautions particulières, causer le blocage de l'extrudeuse ce qui présente un danger réel non négligeable.

On a déjà tenté de mettre au point des liants contenant des groupes méthacryloyle terminaux pour la fabrication de vernis et peintures en poudre qui ne requièrent pas la présence d'un agent de réticulation; il s'agit de liants durcissables par irradiation ultraviolette ou par faisceaux d'électrons accélérés.

Le brevet américain 3.974.303 décrit de telles compositions renfermant comme liants, des résines thermoplastiques très diverses. Toutefois, le seul polyester décrit dans ce brevet (exemple 3) est un polyester amorphe qui possède une température de transition vitreuse inférieure à la température ambiante (2,5°C). Les compositions préparées au départ de ce polyester ne présentent dès lors pas la moindre stabilité au stockage et ne sont d'aucune utilité pratique.

Par voie de conséquence, il est très souhaitable de pouvoir disposer de nouveaux liants pour la fabrication de compositions en poudre qui peuvent être durcis par irradiation ultraviolette ou par faisceaux d'électrons accélérés et qui ne présentent plus les inconvénients rappelés plus haut, compte tenu du fait que le mécanisme de réticulation n'est plus concomitant à celui de fusion de la poudre. De tels liants devraient permettre de préparer des compositions en poudre durcissables à des températures peu élevées, par exemple 100 à 150°C, fusibles rapidement, comme pendant des durées courtes de 1 à 5 minutes, avant irradiation. En outre ces compositions devraient présenter une bonne stabilité au stockage et assurer en même temps la production d'enduits de peinture ou de vernis possédant d'excellentes propriétés, en particulier en ce qui concerne la fluidité à l'état fondu, l'aspect de surface, la dureté superficielle, la flexibilité, les propriétés mécaniques, la résistance aux solvants et la résistance aux intempéries.

On a maintenant fait la découverte surprenante que cet objectif est atteint lorsque, pour la préparation des compositions en poudre durcissables par rayonnement, on utilise comme liant un mélange de polyesters semi-cristallins contenant des groupes méthacryloyle terminaux et de polyesters amorphes contenant des groupes méthacryloyle terminaux. Ces polyesters sont préparés à partir d'un méthacrylate de glycidyle et de polyesters, semi-cristallins ou amorphes, eux-mêmes préparés à partir de constituants acide et alcoolique déterminés.

La présente invention a donc pour objet de nouvelles compositions en poudre durcissables par rayonnement comprenant un mélange d'au moins un polyester semi-cristallin contenant des groupes méthacryloyle terminaux et au moins un polyester amorphe contenant des groupes méthacryloyle terminaux, ces polyesters comprenant les produits de réaction d'un méthacrylate de glycidyle et d'un polyester semi-cristallin ou amorphe contenant des groupes carboxyle terminaux, ledit polyester semi-cristallin contenant des groupes carboxyle terminaux étant choisi parmi

    (a) un polyester qui est le produit de réaction de

(1) un constituant acide qui contient (a. 1.1) 85 à 100 moles % d'acide téréphtalique, d'acide 1,4-cyclohexanedicarboxylique ou d'acide 1,12-dodecanedioïque et (a. 1.2) 0 à 15 moles % d'au moins un autre acide di- ou polycarboxylique aliphatique, cycloaliphatique ou aromatique ayant de 4 à 14 atomes de carbone; avec, (2) un constituant alcoolique qui contient (a.2.1) 85 à 100 moles % d'un diol aliphatique saturé à chaîne droite ayant de 2 à 12 atomes de carbone et (a.2.2) 0 à 15 moles % d'au moins un autre di- ou polyol aliphatique ou cycloaliphatique ayant de 2 à 15 atomes de carbone; et

(b) un polyester qui est le produit de réaction de

(1) un constituant acide qui contient (b. 1.1) 85 à 100 moles % d'un acide dicarboxylique aliphatique saturé à chaîne droite ayant de 4 à 14 atomes de carbone et (b. 1.2) 0 à 15 moles % d'au moins un autre acide di- ou polycarboxylique aliphatique, cycloaliphatique ou aromatique ayant de 4 à 14 atomes de carbone: avec, (2) un constituant alcoolique qui contient (b.2.1) 85 à 100 moles % de 1,4-cyclohexanediol ou de 1,4-cyclohexanediméthanol et (b.2.2) 0 à 15 moles % d'au moins un autre di- ou polyol aliphatique ou cycloaliphatique ayant de 2 à 15 atomes de carbone;

et ledit polyester amorphe contenant des groupes carboxyle terminaux étant constitué du
(c) produit de réaction de

(1) un constituant acide qui contient (c. 1. 1) 40 à 100 moles % d'acide téréphtalique ou d'acide isophtalique et (c.1.2) 0 à 60 moles % d'un autre acide di- ou polycarboxylique aliphatique, cycloaliphatique ou aromatique ayant de 4 à 14 atomes de carbone, avec (2) un constituant alcoolique qui contient (c.2.1) 35 à 100 moles % de néopentylglycol et (c.2.2) 0 à 65 moles % d'un autre di- ou polyol aliphatique ou cycloaliphatique ayant de 2 à 15 atomes de carbone.

De préférence, le constituant acide (c.1.1) contient 80 à 100 moles % d'acide téréphtalique ou d'acide isophtalique et le constituant (c.1.2) 0 à 20 moles % d'un autre acide di- ou polycarboxylique aliphatique, cycloaliphatique ou aromatique ayant de 4 à 14 atomes de carbone. De préférence également, le constituant alcoolique (c.2.1) contient 60 à 100 moles % de néopentylglycol et le constituant (c.2.2) 0 à 40 moles % d'un autre di- ou polyol aliphatique ou cycloaliphatique ayant de 2 à 15 atomes de carbone.

Les polyesters semi-cristallins contenant des groupes méthacryloyle terminaux incorporés dans les compositions conformes à la présente invention présentent un degré d'insaturation méthacrylique terminale de 0,17 à 2,0, de préférence de 0,35 à 1,50 milliéquivalent de doubles liaisons par gramme de polyester.

En outre, ces polyesters semi-cristallins contenant des groupes méthacryloyle terminaux présentent les caractéristiques suivantes:

-- un poids moléculaire moyen en nombre compris entre 1.000 et 20.000, de préférence entre 1.400 et 8.500, mesuré par chromatographie par perméation de gel (ou CPG),
-- un point de fusion bien défini d'environ 60 à 150°C, déterminé par calorimétrie à balayage différentiel (ou DSC) selon la norme ASTM D 3418-82,
-- une viscosité inférieure ou égale à 10.000 mPa.s à 175°C, mesurée par la méthode cône/plateau (viscosité ICI), selon la norme ASTM D 4287-88.

Le constituant acide du polyester semi-cristallin (a) contenant des groupes carboxyle terminaux contient 85 à 100 moles % d'acide téréphtalique, d'acide 1,4-cyclohexanedicarboxylique ou d'acide 1,12-dodécanedioïque et éventuellement jusqu'à 15 moles % d'un ou plusieurs autres acides di- ou polycarboxyliques aliphatiques, cycloaliphatiques ou aromatiques ayant de 4 à 14 atomes de carbone, tels que l'acide maléique, l'acide fumarique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque et l'acide sébacique. Ces acides peuvent être utilisés sous forme de l'acide libre ou de leurs dérivés fonctionnels, en particulier sous la forme de l'anhydride. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange, mais de préférence, on les utilise seuls.

Le constituant alcoolique du polyester semi-cristallin (a) contenant des groupes carboxyle terminaux contient 85 à 100 moles % d'un diol aliphatique saturé à chaine droite ayant de 2 à 12 atomes de carbone. Des exemples de diols qui peuvent être utilisés sont l'éthylène glycol, le 1,4-butanediol, le 1,5-pentanediol et le 1,6-hexanediol. Le constituant alcoolique du polyester semi-cristallin (a) contenant des groupes carboxyle terminaux peut contenir également jusqu'à 15 moles % d'un ou plusieurs autres di- ou polyols aliphatiques ou cycloaliphatiques ayant de 2 à 15 atomes de carbone, comme par exemple le 1,4-cyclohexanediol, le 1,4-cyclohexanediméthanol ou le bisphénol A hydrogéné. Pour la préparation de polyesters ramifiés, on utilise avantageusement des polyols trihydroxylés ou tétrahydroxylés, tels que le triméthylolpropane, le ditriméthylolpropane, le triméthyloléthane ou le péntaérythritol et leurs mélanges.

Le constituant acide du polyester semi-cristallin (b) contenant des groupes carboxyle terminaux contient 85 à 100 moles % d'un acide dicarboxylique aliphatique saturé à chaine droite ayant de 4 à 14 atomes de carbone. Des exemples des acides qui peuvent être utilisés sont l'acide succinique, l'acide glutarique, l'acide adipique, l'acide pimélique, l'acide subérique, l'acide azélaïque, l'acide sébacique, l'acide 1,12-dodécanedioïque, etc. Ces acides peuvent être utilisés sous forme d'acides libres ou de leurs dérivés fonctionnels, en particulier sous la forme d'anhydrides. En outre, ces acides peuvent être utilisés seuls ou en mélange, mais de préférence on les utilise seuls.

Le constituant acide du polyester semi-cristallin (b) contenant des groupes carboxyle terminaux peut contenir également jusqu'à 15 moles % d'un ou plusieurs autres acides di- ou polycarboxyliques aliphatiques; cycloaliphatiques ou aromatiques ayant de 4 à 14 atomes de carbone, tels que l'acide maléique, l'acide fumarique, l'acide téréphtalique, l'acide phtalique, l'acide isophtalique, l'acide 1,2-cyclohexanedicarboxylique, l'acide 1,3-cyclohexanedicarboxylique, l'acide 1,4-cyclohexanedicarboxylique. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre. ces acides di- ou polycarboxyliques peuvent être utilisés seuls ou en mélange, mais de préférence, on les utilise seuls.

Le constituant alcoolique du polyester semi-cristallin (b) contenant des groupes carboxyle terminaux contient 85 à 100 moles % de 1,4-cyclohexanediol ou de 1,4-cyclohexanediméthanol. Le constituant alcoolique du polyester semi-cristallin (b) contenant des groupes carboxyle terminaux peut contenir également jusqu'à 15 moles % d'un ou plusieurs autres di- ou polyols aliphatiques ou cycloaliphatiques tels que l'éthylène glycol, le propylène glycol, le 1,4-butanediol, le 1,5-pentanediol, le 1,6-hexanediol. le 1,4-cyclohexanediol, le 1,4-cyclohexanediméthanol et le bisphénol A hydrogéné. Pour la préparation de polyesters ramifiés, on utilise avantageusement des polyols trihydroxylés ou tétrahydroxylés, tels que le triméthylolpropane. le ditriméthylolpropane, le triméthyloléthane ou le pentaérythritol et leurs mélanges.

Les polyesters amorphes contenant des groupes méthacryloyle terminaux incorporés dans les compositions conformes à la présente invention présentent un degré d'insaturation méthacrylique terminale de 0,17 à 1,5, de préférence de 0,35 à 1,25 milliéquivalent de doubles liaisons par gramme de polyester.

En outre, ces polyesters amorphes contenant des groupes mèthacryloyle terminaux présentent les caractéristiques suivantes:

- un poids moléculaire moyen en nombre compris entre 1.100 et 9.000 environ, de préférence entre 1.300 et 8.500, mesuré par chromatographie par perméation de gel (ou CPG),
- une température de transition vitreuse allant de 45 à 80°C,
- une fonctionnalité comprise entre 2 et 4.

Le constituant acide du polyester amorphe (c) contenant des groupes carboxyle est constitué de 40 à 100 moles %, de préférence de 80 à 100 moles % d'acide téréphtalique ou d'acide isophtalique, et de 0 à 60 moles %, de préférence de 0 à 20 moles % d'un autre acide di- ou polycarboxylique aliphatique, cycloaliphatique ou aromatique ayant de 4 à 14 atomes de carbone, tel que l'acide maléique, l'acide fumarique, l'acide tétrahydrophtalique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque et l'acide sébacique. Ces acides peuvent être utilisés sous forme de l'acide libre ou de leurs dérivés fonctionnels, en particulier sous la forme de l'anhydride. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange.

Le constituant alcoolique du polyester amorphe (c) contenant des groupes carboxyle est constitué de 35 à 100 moles %. de préférence de 60 à 100 moles % de néopentyl glycol et de 0 à 65 moles %, de préférence de 0 à 40 moles % d'un autre di- ou polyol aliphatique ou cycloaliphatiques ayant de 2 à 15 atomes de carbone, tels que l'éthylène glycol, le diéthylène glycol, le 1,4-butanediol, le 1,6-hexanediol, le propylène glycol, le 1,4-cyclohexanediol, le 1,4-cyclohexanediméthanol. le bisphénol A hydrogéné, le 2-éthyt-2-butyt-1,3-propanediol. le 2-méthyl-1,3-propanediol, l'hydroxypivalate de néopentyl glycol. L'utilisation d'un polyol comportant au moins trois groupes hydroxyle, comme le triméthylolpropane. le ditriméthylolpropane, le pentaérythriol, permet la préparation de polyesters ramifiés.

Une caractéristique essentielle des polyesters semi-cristallins et des polyesters amorphes incorporés dans les compositions conformes à la présente invention est qu'ils sont constitués de chaines qui contiennent, pratiquement toutes, des groupes méthacryloyle réticulables à chaque extrémité de la chaine. Ces groupes méthacryloyle sont apportés par réaction des polyesters semi-cristallin ou amorphes contenant des groupes carboxyle avec un méthacrylate de glycidyle, comme le méthacrylate de glycidyle, le méthacrylate de β-méthylglycidyle, etc.

On a constaté que les polyesters contenant des groupes méthacryloyle terminaux fournissent des compositions montrant, sous irradiation, une vitesse de durcissement plus grande que les polyesters contenant de l'insaturation uniquement apportée par des acides polycarboxyliques contenant des groupes éthyléniquement insaturés tels qu'on en trouve dans l'acide maléique, l'acide fumarique, l'acide tétrahydrophtalique, etc.

Toutefois, selon l'invention, la combinaison de ces deux types d'insaturation méthacrylique terminale et éthylénique dans la chaine dans ces polyesters, et plus particulièrement dans le polyester amorphe, fournit des compositions donnant des revêtements ayant des propriétés de dureté au crayon et de résistance aux agents chimiques encore meilleures que celles des revêtements obtenus à partir de mélanges de polyesters semi-cristallins et amorphes ne contenant que des groupes méthacryloyle terminaux, sans insaturation éthylénique dans la chaine polyester. La quantité de cette insaturation éthylénique dans la chaine des polyesters amorphes est de 0 à 3,5, de préférence de 0 à 1,0 milliéquivalent de double liaison par gramme de polyester.

Pour être utilisables dans des compositions en poudre, les polyesters semi-cristallins doivent obligatoirement répondre aux exigences suivantes:

- il faut que les polyesters présentent un degré suffisamment élevé de cristallinité; celui-ci sera par exemple supérieur ou égal à 10 Joules/g, de préférence 15 Joules/g, déterminé selon la norme ASTM D 3418-82; et
- la durée de cristallisation doit être suffisamment courte.

Pour répondre à ces exigences, il faut que la chaine du polyester soit aussi régulière que possible. Dans ce but, il est préférable que les constituants acide et alcoolique entrant dans la composition du polyester semi-cristallin soient des composés symétriques à chaine droite comme les diols aliphatiques saturés à chaine droite et les acides dicarboxyliques saturés à chaine droite et que ces composés soient utilisés seuls plutôt qu'en mélange.

On notera par ailleurs que la réaction avec un méthacrylate de glycidyle n'affecte pas le caractère semi-cristallin du polyester obtenu.

Pour atteindre les buts poursuivis par la présente invention, il faut donc surtout opérer un choix judicieux de la nature des constituants acide et alcoolique entrant dans la composition des polyesters afin d'assurer le degré de cristallinité souhaité de ceux-ci.

Grâce au caractère semi-cristallin des polyesters utilisés dans les compositions selon la présente invention, les poudres présentent une très bonne stabilité au stockage et l'on peut obtenir des enduits à des températures d'application peu élevées de l'ordre de 100 à 150°C. Il est évident aussi que l'abaissement de la température d'application est avantageuse économiquement, puisqu'elle entraine une économie d'énergie. Un autre avantage non négligeable est que l'on peut obtenir des revêtements sur des substrats plus sensibles à la chaleur tels que, par exemple, le bois et les matières plastiques, en élargissant ainsi le domaine d'application de ce type de produits.

Cependant, par rapport aux polyesters semi-cristallins connus, qui ne contiennent pas de groupes méthacryloyle terminaux, les polyesters semi-cristallins contenant des groupes méthacryloyle terminaux qui sont incorporés dans les compositions en poudre conformes à l'invention présentent aussi une série d'avantages supplémentaires très importants.

Ainsi que cela a déjà été expliqué dans l'introduction de la présente spécification, pour qu'ils puissent être durcis sous l'effet de la chaleur à basse température, les polyesters semi-cristallins connus, utilisés seuls ou en mélange, requièrent la présence d'un agent de réticulation et d'un catalyseur, avec comme conséquence la formation de revêtements défectueux (particules gélifiées et peau d'orange).

L'avantage primordial des compositions en poudre comprenant un mélange des polyesters semi-cristallins et des polyesters amorphes conformément à l'invention est qu'elles peuvent être durcies à basse température, sans agent de réticulation supplémentaire ni catalyseur, par irradiation ultraviolette ou par faisceaux d'électrons accélérés, après une très courte durée à l'état fondu, allant de 1 à 5 minutes.

Ceci permet d'obvier dans une large mesure aux inconvénients précédemment décrits qu'amène la présence d'un agent de réticulation et d'un catalyseur à la réticulation et au durcissement sous l'effet de la chaleur.

En effet, vu l'absence d'agent de réticulation, toute réaction prématurée avec celui-ci est exclue pendant la préparation de la poudre dans l'extrudeuse et surtout au moment où le film fondu doit s'étaler sur la surface du substrat à revêtir. On peut dès lors obtenir facilement la viscosité qui convient pour assurer un étalement parfait du film fondu, étant donné que la réticulation conduisant au durcissement du film fondu ne commence qu'au moment de l'exposition de celui-ci à des rayons ultraviolets ou à des faisceaux d'électrons accélérés. Ces avantages se traduisent dans les faits par l'obtention de revêtements bien tendus ayant un aspect tisse et sans défauts apparents.

Un autre avantage des compositions en poudre comprenant un mélange des polyesters semi-cristallins et des polyesters amorphes conformes à l'invention, comme les exemples qui suivent le montreront, est qu'elles fournissent après durcissement par rayonnement des revêtements présentant une très bonne flexibilité, en même temps qu'une bonne dureté de surface.

Les compositions en poudre durcissables par rayonnement conformes à l'invention et comprenant un mélange d'au moins un polyester semi-cristallin contenant des groupes méthacryloyle terminaux et d'au moins un polyester amorphe contenant des groupes méthacryloyle terminaux contiennent de préférence de 40 à 100 parties en poids des polyesters semi-cristallins et amorphes contenant des groupes méthacryloyle terminaux pour 100 parties de la composition. En plus des polyesters contenant des groupes méthacryloyle terminaux, ces compositions contiennent éventuellement un photoinitiateur et les diverses substances auxiliaires utilisées conventionnellement dans la fabrication de peintures et vernis en poudre. Ces compositions contiennent de préférence 5 à 50 parties en poids, et plus particulièrement 5 à 35 parties en poids du polyester semi-cristallin contenant des groupes méthacryloyle terminaux, à côté de 50 à 95 parties en poids, et de préférence 65 à 95 parties en poids du polyester amorphe contenant des groupes méthacryloyle terminaux, par rapport à l'ensemble du poids des polyesters.

En outre, selon une variante du mode de réalisation de l'invention, les compositions en poudre durcissables par rayonnement comprennent également un oligomère éthyléniquement insaturé. A titre d'exemples de ces oligomères éthyléniquement insaturés, on citera le triacrylate et le triméthacrylate de l'isocyanurate de tris(2-hydroxyéthyle), les époxy acrylates et méthacrylates qui sont formés par réaction d'un composé époxy (par exemple, l'éther diglycidylique du bisphénol A) avec l'acide acrylique ou méthacrylique, les uréthannes acrylates et méthacrylates qui sont formés par réaction d'un di- ou polyisocyanate organique avec un acrylate d'hydroxyalkyle ou un méthacrylate d'hydroxyalkyle et éventuellement un alcool mono- et/ou polyhydroxylé (par exemple, le produit de réaction de l'acrylate ou du méthacrylate d'hydroxyéthyle avec le toluène-düsocyanate ou l'isophorone-diisocyanate), les acryliques acrylates ou méthacrylates comme par exemple, le produit de réaction de l'acide acrylique ou méthacrylique avec un copolymère contenant des groupes glycidyle obtenu par copolymérisation de monomères acryliques comme le méthacrylate de n-butyle et le méthacrylate de méthyle avec l'acrylate ou le méthacrylate de glycidyle, etc. Le triacrylate de l'isocyanurate de tris(2-hydroxyéthyle) est utilisé de préférence. Comme ces oligomères éthyléniquement insaturés contiennent des doubles liaisons polymérisables, ils participent également au durcissement par rayonnement et peuvent dès lors fournir des enduits dont la dureté de surface est encore accrue. Selon les applications envisagées, les compositions conformes à l'invention contiennent 0 à 20, de préférence 0 à 10 parties en poids d'oligomère éthyléniquement insaturé pour 100 parties de composition conforme à l'invention.

Pour préparer les polyesters semi-cristallins ou amorphes contenant des groupes méthacryloyle terminaux, on prépare d'abord un polyester contenant des groupes carboxyle terminaux, à chaine droite ou ramifiée, et on fait réagir ensuite le polyester contenant des groupes carboxyle terminaux ainsi préparé avec le méthacrylate de glycidyle ou le méthacrylate de β-méthylglycidyle.

Le polyester semi-cristallin ou amorphe contenant des groupes carboxyle terminaux est préparé selon les méthodes conventionnelles de synthèse des polyesters par estérification en un ou plusieurs stades.

Si l'on procède en un stade pour l'obtention du polyester semi-cristallin ou amorphe contenant des groupes carboxyle terminaux, on fait réagir ensemble un excès stoechiométrique d'un ou plusieurs acides di- ou polycarboxyliques et un ou plusieurs diols ou polyols appropriés.

Pour l'obtention d'un polyester semi-cristallin ou amorphe contenant des groupes carboxyle terminaux en deux stades, on prépare d'abord un polyester contenant des groupes hydroxyle terminaux à partir d'un ou plusieurs acides di- ou polycarboxyliques et d'un excès stoechiométrique d'un ou plusieurs diols ou polyols appropriés et on estérifie ensuite le polyester contenant des groupes hydroxyle terminaux ainsi obtenu avec un ou plusieurs autres acides di- ou polycarboxyliques appropriés pour obtenir un polyester semi-cristallin ou amorphe contenant des groupes carboxyle terminaux.

Pour la préparation des polyesters semi-cristallins ou amorphe contenant des groupes carboxyle terminaux, on utilise en général un réacteur classique muni d'un agitateur, d'une entrée de gaz inerte (azote), d'une colonne de distillation reliée à un condenseur refroidi à l'eau et d'un thermomètre connecté à un thermorégulateur.

Les conditions d'estérification utilisées pour la préparation de ces polyesters sont classiques, à savoir que l'on peut utiliser un catalyseur d'estérification usuel dérivé de l'étain, tel que l'oxyde de dibutylétain, le dilaurate de dibutylétain, le trioctoate de n-butylétain ou dérivé du titane, tel que le titanate de tétrabutyle, à raison de 0 à 1% en poids des réactifs, et ajouter éventuellement des antioxydants tels que les composés phénoliques IRGANOX 1010 (CIBA-GEIGY) ou IONOL CP (SHELL), seuls ou avec des stabilisants de type phosphonite ou phosphite, tels que le phosphite de tributyle ou le phosphite de triphényle, à raison de 0 à 1% en poids des réactifs.

La polyestérification est généralement effectuée à une température que l'on augmente progressivement de 130°C à environ 180 à 250°C, d'abord sous pression normale, puis sous pression réduite à la fin de chaque stade du procédé, en maintenant ces conditions jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple, l'indice d'hydroxyle, l'indice d'acide, le poids moléculaire et/ou la viscosité.

Les polyesters semi-cristallins contenant des groupes carboxyle ainsi obtenus présentent les caractéristiques suivantes :

- un indice d'acide de 10 à 150 mg de KOH/g, de préférence de 20 à 100 mg de KOH/g,
- un poids moléculaire moyen en nombre compris entre 800 et 20.000, de préférence entre 1.000 et 8.500,
- un point de fusion bien défini d'environ 60 à 150°C, déterminé par calorimétrie à balayage différentiel (ou DSC) selon la norme ASTM D 3418-82,
- une viscosité à l'état fondu inférieure à 10.000 mPa.s mesurée à 175°C au viscosimètre cône/plateau, (connue sous le nom de "viscosité ICI"), selon la norme ASTM D 4287-88, et
- une fonctionnalité qui est, de préférence, comprise entre 2 et 3.

Les polyesters amorphes contenant des groupes carboxyle ainsi obtenus présentent les caractéristiques suivantes:

- un indice d'acide de 10 à 100 mg de KOH/g, de préférence de 20 à 70 mg de KOH/g,
- un poids moléculaire moyen en nombre compris entre 800 et 9.000, de préférence de 1.000 à 8.500,
- une fonctionnalité qui est, de préférence, comprise entre 2 et 4,
- une température de transition vitreuse comprise entre 45 et 85°C.
- un degré d'insaturation éthylénique dans la chaine du polyester de 0 à 3,5, de préférence de 0 à 1,0 milliéquivalent de double liaison par gramme de polyester.

Pour la préparation des polyesters semi-cristallins contenant des groupes méthacryloyle, et des polyesters amorphes contenant des groupes méthacryloyle, on procède de la manière suivante. Au terme de la polycondensation, on laisse refroidir le polyester, à l'état fondu, se trouvant dans le réacteur décrit plus haut, jusqu'à une température comprise entre 100 et 160°C, on y ajoute l'inhibiteur de polymérisation et ensuite lentement une quantité substantiellement équivalente de méthacrylate de glycidyle ou de méthacrylate de β-méthylglycidyle.

Les conditions opératoires utilisées pour la préparation des polyesters semi-cristallins ou amorphes contenant des groupes méthacryloyle terminaux sont également classiques, à savoir que l'on peut utiliser un catalyseur de la réaction acide-époxy, comme des dérivés aminés, tels que la 2-phénylimidazoline, des phosphines, telles que la triphénylphosphine, des ammoniums quaternaires, tels que le chlorure de tétrapropylammonium ou le bromure de tétrabutylammonium ou des sels de phosphonium, tels que le bromure d'éthyltriphénylphosphonium ou le chlorure de benzyltriphénylphosphonium, ou des catalyseurs à base de chrome, à raison de 0,01 à 1,0 % en poids des réactifs, et ajouter des inhibiteurs de polymérisation radicalaire, tels que la phénothiazine ou un inhibiteur de type hydroquinone, à raison de 0.01 à 1,0 % en poids des réactifs.

La réaction d'addition est généralement effectuée à une température comprise entre 100 et 160°C. Le degré d'avancement de la réaction est suivi par détermination des propriétés du polyester obtenu, par exemple, l'indice d'hydroxyle, l'indice d'acide, le degré d'insaturation terminale et/ou la teneur en groupes époxy résiduaires.

Les mélanges des polyesters semi-cristallins contenant des groupes méthacryloyle terminaux et des polyesters amorphes contenant des groupes méthacryloyle terminaux décrits ci-dessus sont destinés à servir comme liants dans la préparation de compositions en poudre durcissables par irradiation ultraviolette ou par faisceaux d'électrons accélérés, lesdites compositions étant utilisables notamment comme vernis et peintures se prêtant à une application suivant la technique de dépôt au moyen d'un pistolet pulvérisateur électrostatique ou tribo-électrique ou suivant la technique de dépôt en lit fluidisé.

C'est pourquoi la présente invention se rapporte en outre à l'utilisation des compositions en poudre durcissables par rayonnement conformes à l'invention pour la préparation de vernis et peintures en poudre, ainsi qu'aux vernis et peintures en poudre obtenus à l'aide de ces compositions.

Enfin, la présente invention se rapporte également à un procédé de revêtement d'un article qui est caractérisé par l'application sur ledit article, d'une composition en poudre durcissable par rayonnement conforme à l'invention, par dépôt par pulvérisation au pistolet électrostatique ou tribo-électrique ou par dépôt en lit fluidisé, suivie de la fusion du revêtement ainsi obtenu par chauffage à une température de 100 à 150°C pendant une durée d'environ 1 à 5 minutes, et du durcissement du revêtement à l'état fondu par irradiation ultraviolette ou par faisceaux d'électrons accélérés.

Pour le radiodurcissement des compositions en poudre conformes à l'invention avec des faisceaux d'électrons accélérés, il n'est pas nécessaire d'utiliser un photoinitiateur, vu que ce type de rayonnement assure à lui seul une production suffisamment importante de radicaux libres pour que le durcissement soit extrêmement rapide. Par contre, lorsqu'il s'agit de photodurcir les compositions en poudre conformes à l'invention avec un rayonnement dont les longueurs d'ondes sont comprises entre 170 et 600 nanomètres (rayonnement UV), la présence d'au moins un photoinitiateur est indispensable.

Les photoinitiateurs utilisables selon la présente invention sont choisis parmi ceux couramment utilisés à cet effet.

Les photoinitiateurs appropriés qui peuvent être utilisés sont les composés carbonylés aromatiques tels que la benzophénone et ses dérivés alkylés ou halogénés, l'anthraquinone et ses dérivés, la thioxanthone et ses dérivés, les éthers de la benzoïne, les diones-alpha aromatiques ou non-aromatiques, les dialkylacetals de benzile, les dérivés de l'acétophénone et les oxydes de phosphine.

Les photoinitiateurs pouvant convenir sont par exemple la 2,2'-diéthoxyacètophénone, la 2-, 3- ou 4-bromoacétophénone, la 2,3-pentanedione, l'hydroxycyclohexylphénylcétone, la benzaldéhyde. la benzoïne. la benzophénone, le 9,10-dibromoanthracène, la 2-hydroxy-2-méthyl-1-phénylpropane-1-one, la 4,4'-dichlorobenzophénone, la xanthone, la thioxanthone, le diméthylcétal de benzile, l'oxyde de diphényl(2,4,6-triméthylbenzoyl)-phosphine etc. Eventuellement, il peut être avantageux d'utiliser un photoactivateur tel que la tributylamine, le 2-(2-aminoéthylamino)éthanol, la cyclohexylamine, la diphénylamine, la tribenzylamine ou les aminoacrylates comme par exemple le produit d'addition d'une amine secondaire telle que la diméthylamine, la diéthylamine, la diéthanolamine, etc., avec un polyacrylate de polyol tel que le diacrylate de triméthylolpropane, de 1,6-hexenediol, etc.

Les compositions en poudre conformes à l'invention contiennent 0 à 15 et de préférence 1,5 à 8 parties en poids de photoinitiateurs pour 100 parties en poids de composition conforme à l'invention.

Les compositions en poudre durcissables par rayonnement conformes à l'invention peuvent également contenir diverses substances auxiliaires utilisées conventionnellement dans la fabrication de peintures et vernis en poudre.

Les substances auxiliaires ajoutées éventuellement aux compositions en poudre durcissables par rayonnement conformes à l'invention sont entre autres des composés absorbant les rayons ultraviolets comme le TINUVIN 900 (de CIBA-GEIGY Corp.), des stabilisants à la lumière à base d'amines à empêchement stérique (par exemple le TINUVIN 144 de CIBA-GEIGY Corp.), des agents régulateurs de fluidité comme le RESIFLOW PV5 (de WORLEE), le MODAFLOW (de MONSANTO), l'ACRONAL 4F (de BASF) ou le CRYLCOAT 109 (de UCB), des agents de dégazage tels que la benzoine, etc.

Une variété de pigments et de charges minérales peut également être ajoutée aux compositions en poudre durcissables par rayonnement conformes à l'invention. A titre d'exemples de pigments et de charges on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc.

Ces substances auxiliaires sont utilisées en quantités usuelles, étant entendu que si les compositions durcissables par rayonnement conformes à l'invention sont utilisées comme vernis, on omettra l'addition de substances auxiliaires ayant des propriétés opacifiantes.

Pour la préparation des compositions en poudre durcissables par rayonnement, on mélange à sec le polyester semi-cristallin contenant des groupes méthacryloyle terminaux, le polyester amorphe contenant des groupes méthacryloyle terminaux et éventuellement le photoinitiateur, et les diverses substances auxiliaires utilisées conventionnellement pour la fabrication de peintures et vernis en poudre, par exemple dans un mélangeur à tambour. On peut également commencer par mélanger le polyester semi-cristallin et le polyester amorphe à l'état fondu, et mélanger ensuite ces derniers avec les autres constituants de la poudre. On homogénéise ensuite le mélange à une température située dans l'intervalle de 70 à 150°C dans une extrudeuse. par exemple une extrudeuse à vis unique Buss-Ko-Kneader ou une extrudeuse à double vis de type Wemer-Pfleiderer, APV-BAKER ou PRISM. Ensuite, on laisse refroidir l'extrudat, on le broie et on le tamise pour obtenir une poudre dont la dimension des particules est comprise entre 10 et 150 micromètres.

Au lieu de la méthode ci-dessus, on peut également dissoudre le polyester semi-cristallin et le polyester amorphe contenant des groupes méthacryloyle terminaux, et éventuellement le photoinitiateur, et les diverses substances auxiliaires dans un solvant tel que le dichlorométhane, broyer pour obtenir une suspension homogène contenant environ 30% en poids de matières solides et évaporer ensuite le solvant par exemple par pulvérisation à sec ("spray drying") à une température d'environ 50°C, selon des méthodes connues en soi.

Les peintures et vernis en poudre ainsi obtenus conviennent parfaitement pour une application sur l'article à revêtir par les techniques traditionnelles, c'est-à-dire par la technique bien connue du dépôt en lit fluidisé ou par application au pistolet pulvérisateur électrostatique ou tribo-électrique.

Après avoir été appliqués sur l'article concerné, les revêtements déposés sont chauffés dans un four à circulation forcée ou au moyen de lampes infrarouges à une température de 100 à 150°C pendant une durée d'environ 1 à 5 minutes en vue d'obtenir la fusion et l'étalement des particules de poudre en un revêtement lisse, uniforme et continu à la surface dudit article. Le revêtement fondu est ensuite durci par un rayonnement, comme la lumière ultraviolette émise, par exemple, par des radiateurs UV à vapeur de mercure à moyenne pression, d'au moins 80 à 240 W/cm linéaire, ou par n'importe quelle autre source bien connue de l'état de la technique, à une distance d'environ 5 à 20 cm et pendant une durée de 1 à 20 secondes.

Le revêtement fondu peut également être durci avec des faisceaux d'électrons accélérés d'au moins 150 KeV, la puissance des appareils employés étant directement fonction de l'épaisseur de la couche de composition à durcir par polymérisation.

Les compositions en poudre durcissables par rayonnement conformes à l'invention peuvent être appliquées sur les substrats les plus divers, comme par exemple le papier, le carton, le bois, les textiles. les métaux de différente nature, les matières plastiques comme les polycarbonates, les poly(méth)acrylates, les polyoléfines, les polystyrènes, les chlorures de polyvinyle, les polyesters, les polyuréthannes, les polyamides, les copolymères comme l'acrylonitrile-butadiène-styrène (ABS) ou l'acétate-butyrate de cellulose, etc.

Les exemples qui vont suivre illustrent l'invention sans la limiter. Sauf indication contraire, les parties citées dans les exemples sont des parties en poids.

Exemple 1.

Synthèse d'un polyester semi-cristallin contenant des groupes méthacryloyle terminaux en trois stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 419,2 parties de 1,6-hexanediol et 2,1 parties de trioctoate de n-butylétain comme catalyseur. On chauffe le mélange en atmosphère d'azote et sous agitation jusqu'à une température d'environ 140°C, puis on ajoute, toujours sous agitation, 545,4 parties d'acide téréphtalique et on chauffe le mélange graduellement jusqu'à ce que la température atteigne 230°C. Après que l'on ait recueilli environ 95% de la quantité théorique d'eau formée, on obtient un polyester transparent.

Le polyester semi-cristallin contenant des groupes hydroxyle terminaux ainsi obtenu présente les caractéristiques suivantes:

| | |
|---|---|
| indice d'acide | 6 mg de KOH/g |
| indice d'hydroxyle | 41 mg de KOH / g |

2e stade.

On laisse refroidir le polyester contenant des groupes hydroxyle terminaux obtenu au premier stade jusqu'à 200°C et on y ajoute 84,8 parties d'acide isophtalique. On chauffe ensuite graduellement le mélange réactionnel jusqu'à la température de 225°C. On laisse le mélange réactionnel à cette température pendant environ deux heures, jusqu'à ce que le mélange réactionnel devienne transparent, on y ajoute 0,8 partie de phosphite de tributyle et on diminue progressivement la pression jusqu'à 50 mm Hg. On poursuit encore la réaction pendant 3 heures à 225°C sous pression réduite.

Le polyester semi-cristallin contenant des groupes carboxyle terminaux ainsi obtenu présente les caractéristiques suivantes:

| | |
|---|---|
| indice d'acide | 31 mgde KOH/g |
| indice d'hydroxyle | 2 mg de KOH/g |
| viscosité ICI à 175°C | 2.500 mPa.s |

3e stade.

On laisse refroidir le polyester contenant des groupes carboxyle terminaux obtenu au deuxième stade jusqu'à 150°C et on y ajoute 0,5 partie de di-tert. -butylhydroquinone comme inhibiteur de polymérisation et 4,6 parties de bromure d'éthyltriphénylphosphonium comme catalyseur. On y ajoute ensuite lentement en atmosphère d'oxygène et sous agitation 70,3 parties de méthacrylate de glycidyle. Une heure après que l'addition soit terminée, on obtient un polyester semi-cristallin contenant des groupes méthacryloyle terminaux qui présente les caractéristiques suivantes:

| | |
|---|---|
| indice d'acide | 1 mg de KOH/g |
| indice d'hydroxyle | 28 mg de KOH/g |
| teneur en insaturations méthacryliques terminales | 0,5 milliéquivalent/g |
| viscosité ICI à 150°C | 4.000 mPa.s |
| température de fusion (déterminée par calorimétrie à balayage différentiel (ou DSC) avec une vitesse de chauffage de 20°C par minute) | 120 °C |
| $\overline{M}$ n (CPG) | 4.020 |

Exemple 2.

Synthèse d'un polyester semi-cristallin contenant des groupes méthacryloyle terminaux en deux stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 152,2 parties d'éthylène glycol, 727,1 parties d'acide 1,12-dodécanedioïque et 2,0 parties de trioctoate de n-butylétain comme catalyseur. On chauffe le mélange en atmosphère d'azote et sous agitation jusqu'à une température d'environ 140°C à laquelle l'eau formée commence à distiller. Puis on poursuit le chauffage graduellement jusqu'à ce que la masse atteigne la température de 220°C. Lorsque la distillation sous la pression atmosphérique s'arrête, on ajoute 0,8 partie de phosphite de tributyle et on établit progressivement un vide de 50 mm Hg. On poursuit encore la réaction pendant 3 heures à 220°C sous une pression de 50 mm Hg.

Le polyester semi-cristallin contenant des groupes carboxyle terminaux ainsi obtenu présente les caractéristiques suivantes:

| indice d'acide | 102 mg de KOH/g |
|---|---|
| indice d'hydroxyle | 4 mg de KOH/g |

2e stade.

On suit le mode opératoire décrit au troisième stade de l'exemple 1, mais on laisse refroidir préalablement le polyester contenant des groupes carboxyle terminaux obtenu au premier stade jusqu'à la température de 140°C: on ajoute 3,9 parties de chlorure de benzyltriphénylphosphonium et 1,2 parties de di-tert.-butylhydroquinone; on ajoute lentement 201,1 parties de méthacrylate de glycidyle. Le mélange réactionnel est maintenu sous agitation pendant une heure à 140°C, sous oxygène.

On obtient un polyester semi-cristallin contenant des groupes méthacryloyle terminaux qui présente les caractéristiques suivantes:

| indice d'acide | 1,7 mg de KOH/g |
|---|---|
| indice d'hydroxyle | 78 mg de KOH/g |
| teneur en insaturations méthacryliques terminales | 1,4 milliequivalent/g |
| viscosité ICI à 100°C | 10 mPa.s |
| température de fusion (DSC; 20°C/min.) | 67 °C |
| $\overline{M}$n (CPG) | 1.406 |

Exemple 3.

Synthèse d'un polyester amorphe contenant des groupes méthacryloyle terminaux en trois stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 369,7 parties de néopentyl glycol, 10,2 parties de triméthylolpropane et 1,9 partie de trioctanoate de n-butylétain comme catalyseur. On chauffe le mélange en atmosphère d'azote et sous agitation jusqu'à une température d'environ 140°C, puis on ajoute, toujours sous agitation, 528,7 parties d'acide téréphtalique et 27,8 parties d'acide adipique et on chauffe le mélange jusqu'à une température de 190°C à laquelle l'eau formée commence à distiller. Puis on poursuit le chauffage graduellement jusqu'à ce que la masse atteigne la température de 230°C. Après que l'on ait recueilli environ 95% de la quantité théorique d'eau formée, on obtient un polyester transparent.

Le polyester contenant des groupes hydroxyle terminaux ainsi obtenu présente les caractéristiques suivantes:

| indice d'acide | 10 mg de KOH/g |
|---|---|
| indice d'hydroxyle | 51 mg de KOH / g |

2e stade.

On laisse refroidir le polyester contenant des groupes hydroxyle terminaux obtenu au premier stade jusqu'à 200°C et on y ajoute 94,8 parties d'acide isophtalique. On chauffe ensuite graduellement le mélange réactionnel jusqu'à la température de 225°C. On laisse le mélange réactionnel à cette température pendant environ deux heures, jusqû à ce qu'il devienne transparent, on y ajoute 0,9 partie de phosphite de tributyle, puis on diminue progressivement la pression jusqu'à 50 mm Hg. On poursuit encore la réaction pendant 3 heures à 225°C sous pression réduite.

Le polyester contenant des groupes carboxyle terminaux ainsi obtenu présente les caractéristiques suivantes:

| indice d'acide | 37 mg de KOH/g |
|---|---|
| indice d'hydroxyle | 2 mg de KOH/g |
| viscosité ICI à 200°C | 5.400 mPa.s |

3e stade.

On laisse refroidir le polyester contenant des groupes carboxyle terminaux obtenu au deuxième stade jusqu'à 150°C et on y ajoute 0,5 partie de di-tert.-butylhydroquinone comme inhibiteur de polymérisation et 4,5 parties de bromure d'éthyitriphénylphosphonium comme catalyseur. On y ajoute ensuite lentement, en 30 minutes environ, en atmosphère d'oxygène et sous agitation 92,3 parties de méthacrylate de β-méthylglycidyle. Une heure après que l'addition soit terminée, on obtient un polyester amorphe contenant des groupes méthacryloyle terminaux qui présente les caractéristiques suivantes:

| indice d'acide | 1 mg de KOH/g |
|---|---|
| indice d'hydroxyle | 39 mg de KOH/g |
| teneur en insaturations méthacryliques terminales | 0,6 milliéquivalent/g |
| viscosité ICI à 200°C | 3.400 mPa.s |
| Tg (DSC; 20°C/min.) | 51 °C |
| $\overline{M}$n (CPG) | 4.014 |

Exemple 4.

Synthèse d'un polyester amorphe contenant des groupes méthacryloyle terminaux en trois stades.

1er stade.

Dans un ballon tel qu'utilisé à l'exemple 3, on introduit 365,8 parties de néopentylglycol et 1,9 partie de trioctoate de n-butylétain comme catalyseur. On chauffe le mélange en atmosphère d'azote et sous agitation jusqu'à une température d'environ 140°C, puis on ajoute, toujours sous agitation, 460,0 parties d'acide téréphtalique et 24,3 parties d'acide adipique et on chauffe le mélange jusqu'à une température de 190°C à laquelle l'eau formée commence à distiller. Puis on poursuit le chauffage graduellement jusqu'à ce que la masse atteigne la température de 230°C. Après que l'on ait recueilli environ 95% de la quantité théorique d'eau formée, on obtient un polyester transparent.

Le polyester contenant des groupes hydroxyle terminaux ainsi obtenu présente les caractéristiques suivantes:

| indice d'acide | 2 mg de KOH/g |
|---|---|
| indice d'hydroxyle | 63 mg de KOH/g |

2e stade.

On laisse refroidir le polyester contenant des groupes hydroxyle terminaux obtenu au premier stade jusqu'à 200°C et on y ajoute 159,4 parties d'acide isophtalique. On chauffe ensuite graduellement le mélange réactionnel jusqu'à la température de 225°C. On laisse le mélange réactionnel à cette température pendant environ deux heures, jusqu'à ce que le mélange réactionnel devienne transparent, on y ajoute 0,7 partie de phosphite de tributyle, puis on diminue progressivement la pression jusqu'à 50 mm Hg. On poursuit encore la réaction pendant 3 heures à 225°C sous pression réduite.

Le polyester contenant des groupes carboxyle terminaux ainsi obtenu présente les caractéristiques suivantes:

| indice d'acide | 47 mg de KOH/g |
|---|---|
| indice d'hydroxyle | 3 mg de KOH/g |
| viscosité ICI à 200°C | 3.200 mPa.s |

3e stade.

On laisse refroidir le polyester contenant des groupes carboxyle terminaux obtenu au deuxième stade jusqu'à 150°C et on y ajoute 0,7 partie de di-tert.-butylhydroquinone comme inhibiteur de polymérisation et 4,4 parties de bromure d'éthyltriphénylphosphonium comme catalyseur. On y ajoute ensuite lentement, en 30 minutes environ, en atmosphère d'oxygène et sous agitation 107,4 parties de méthacrylate de glycidyle. Une heure après que l'addition soit terminée, on obtient un polyester amorphe contenant des groupes méthacryloyle terminaux qui présente les caractéristiques suivantes:

| indice d'acide | 1 mg de KOH/g |
|---|---|
| indice d'hydroxyle | 43 mg de KOH/g |
| teneur en insaturations méthacryliques terminales | 0,8 milliéquivalent/g |
| viscosité ICI à 150°C | 7.600 mPa.s |
| température de transition vitreuse (déterminée par calorimétrie à balayage différentiel (ou DSC) avec une vitesse de chauffage de 20°C par minute) | 37 °C |
| $\overline{M}$n (CPG) | 2.532 |

Exemple 5.

Synthèse d'un polyester semi-cristallin contenant des groupes méthacryloyle terminaux en 2 stades.

1er stade

Un mélange de 191,4 parties d'éthylène glycol, de 800,6 parties d'acide 1,12-dodécanedioïque et de 2,2 parties de trioctoate de n-butylétain comme catalyseur est mis en réaction selon le procédé complet décrit au premier stade de l'exemple 2.
Le polyester semi-cristallin contenant des groupes carboxyle terminaux ainsi obtenu présente les caractéristiques suivantes:

| indice d'acide | 52 mg de KOH/g |
|---|---|
| indice d'hydroxyle | 2 mg de KOH/g |

2e stade

On laisse refroidir le polyester obtenu au 1er stade jusqu'à la température de 140°C et on y ajoute 0,7 partie de di-tert.-butylhydroquinone et 4,4 parties de chlorure de benzyltriphénylphosphonium. On ajoute alors lentement à ce mélange 111,8 parties de méthacrylate de glycidyle et on laisse le mélange sous agitation pendant une heure à 140°C, sous oxygène. On obtient un polyester semi-cristallin contenant des groupes méthacryloyle terminaux qui présente les caractéristiques suivantes:

| indice d'acide | 2,0 mg de KOH/g |
|---|---|
| indice d'hydroxyle | 48 mg de KOH/g |
| teneur en insaturations méthacryliques terminales | 0,8 milliéquivalent/g |
| viscosité ICI à 100°C | 150 mPa.s |
| température de fusion (DSC; 20°C/min) | 65°C |
| $\overline{M}$n (GPC) | 2.530 |

Exemple 6.

Synthèse d'un polyester semi-cristallin contenant des groupes méthacryloyle terminaux en 2 stades.

1er stade

Un mélange de 502,6 parties de 1,4-cyclohexanediméthanol, de 545,4 parties d'acide adipique et de 2,3 parties de trioctoate de n-butylétain comme catalyseur est mis en réaction selon le procédé complet décrit au premier stade de l'exemple 2.

Le polyester semi-cristallin contenant des groupes carboxyle terminaux ainsi obtenu présente les caractéristiques suivantes:

| indice d'acide | 31 mg de KOH/ g |
|---|---|
| indice d'hydroxyle | 2 mg de KOH/g |

2e stade

On laisse refroidir le polyester obtenu au 1er stade jusqu'à la température de 140°C et on y ajoute 0,4 partie de di-tert.-butylhydroquinone et 4,6 parties de chlorure de benzyltriphénylphosphonium. On ajoute alors lentement à ce mélange 70,3 parties de méthacrylate de glycidyle et on laisse le mélange sous agitation pendant une heure à 140°C, sous oxygène. On obtient un polyester semi-cristallin contenant des groupes méthacryloyle terminaux qui présente les caractéristiques suivantes:

| indice d'acide | 1,7 mg de KOH/g |
|---|---|
| indice d'hydroxyle | 30 mg de KOH/g |
| teneur en insaturations méthacryliques terminales | 0,5 milliéquivalent/g |
| viscosité ICI à 100°C | 3.600 mPa.s |
| température de fusion (DSC; 20°C/min) | 67 °C |
| $\overline{M}$n (GPC) | 4.024 |

Exemple 7.

Synthèse d'un polyester amorphe contenant des groupes méthacryloyle terminaux en 2 stades.

1er stade

Dans le même réacteur qu'à l'exemple 2, on introduit 372,8 parties de néopentylglycol, 10,2 parties de triméthylolpropane et 2,3 parties de trioctoate de n-butylétain. On chauffe le contenu du ballon jusqu'à 140°C, sous azote et avec agitation et on y ajoute 660,8 parties d'acide isophtalique. On porte le mélange réactionnel à 230°C. L'eau de réaction commence à distiller à 190°C. Lorsque environ 95% de la quantité théorique d'eau ont distillé, le prépolymère est transparent. On y ajoute 0,9 partie de phosphite de tributyle, on place progressivement le réacteur sous un vide de 50 mm de mercure, et on continue à chauffer le mélange réactionnel pendant 3 heures à 225°C

Le polyester amorphe contenant des groupes carboxyle ainsi obtenu présente les caractéristiques suivantes:

| indice d'acide | 38 mg de KOH/ g |
|---|---|
| indice d'hydroxyle | 3 mg de KOH/g |
| viscosite ICI à 200°C | 3.200 mPa.s |

2e stade

On laisse refroidir le polyester obtenu au 1er stade jusqu'à la température de 150°C et on y ajoute 0,5 partie de di-tert.-butylhydroquinone et 4,6 parties de bromure d'éthyltriphénylphosphonium. On ajoute alors lentement à ce mélange 81,1 parties de méthacrylate de glycidyle, pendant une demi heure, et on laisse le mélange sous agitation pendant une heure à 140°C, sous oxygène. On obtient un polyester amorphe contenant des groupes méthacryloyle terminaux qui présente les caractéristiques suivantes:

| indice d'acide | 1 mg de KOH/g |
|---|---|
| indice d'hydroxyle | 35 mg de KOH/g |
| teneur en insaturations méthacryliques terminales | 0,6 milliéquivalent/g |
| viscosité ICI à 100°C | 4.600 mPa.s |
| température de transition vitreuse(DSC; 20°C/min) | 46 °C |
| $\overline{M}$n (GPC) | 4.030 |

Exemple 8.

Synthèse d'un polyester amorphe contenant des groupes méthacryloyle terminaux et des insaturations éthyléniques dans la chaine, en 4 stades.

1er stade

On procède de la même manière qu'à l'exemple 1, en introduisant 164,5 parties de néopentylglycol, 164,5 parties d'éthylène glycol, 10,3 parties de triméthylolpropane et 2,1 parties de trioctoate de n-butylétain dans le réacteur. On chauffe le contenu du ballon jusqu'à 140°C, sous azote et avec agitation et on y ajoute 537,3 parties d'acide téréphtalique. On porte le mélange réactionnel à 230°C. L'eau de réaction commence à distiller à 190°C. Lorsque environ 95% de la quantité théorique d'eau ont distillé, le prépolymère est transparent. Le polyester amorphe contenant des groupes hydroxyle ainsi obtenu présente les caractéristiques suivantes:

| indice d'acide | 7 mg de KOH/ g |
|---|---|
| indice d'hydroxyle | 162 mg de KOH/g |

2e stade

On laisse refroidir le mélange réactionnel à 200°C et on y ajoute 94,8 parties d'acide fumarique, 0,4 partie de phosphite de tributyle et 0,25 partie de di-tert.-butylhydroquinone. Après deux heures à 200°C, un vide de 50 mm de mercure est appliqué sur le mélange réactionnel, et on poursuit encore le chauffage dans ces conditions pendant une heure. Le polyester amorphe contenant des groupes hydroxyle ainsi obtenu présente les caractéristiques suivantes:

| indice d'acide | 17 mg de KOH/ g |
|---|---|
| indice d'hydroxyle | 59 mg de KOH/g |

3e stade

Au polyester obtenu au 2e stade, on ajoute à 200°C 96,1 parties d'acide isophtalique, et on chauffe le mélange réactionnel à 215°C. Après deux heures à 215°C, on y ajoute 0,4 partie de phosphite de tributyle et un vide de 50 mm de mercure est appliqué sur le mélange réactionnel, qui devient transparent; on poursuit encore le chauffage dans ces conditions pendant trois heures.
Le polyester amorphe contenant des groupes carboxyle ainsi obtenu présente les caractéristiques suivantes:

| indice d'acide | 37 mg de KOH/ g |
|---|---|
| indice d'hydroxyle | 5 mg de KOH/g |
| viscosité ICI à 200°C | 4.400 mPa.s |

4e stade

Le polyester obtenu au 3è stade est refroidi à 150°C et on y ajoute 0,25 partie de di-tert.-butylhydroquinone et 4,6 parties de bromure d'éthyltriphénylphosphonium. On ajoute alors lentement à ce mélange 81,1 parties de méthacrylate de glycidyle, pendant une demi heure, et on laisse le mélange sous agitation pendant une heure à 140°C, sous oxygène. On obtient un polyester amorphe contenant des groupes méthacryloyle terminaux et des insaturations éthyléniques dans la chaine qui présente les caractéristiques suivantes:

| | |
|---|---|
| indice d'acide | 2 mg de KOH/g |
| indice d'hydroxyle | 35 mg de KOH / g |
| teneur en insaturations méthacryliques terminales | 0,7 milliéquivalent/g |
| teneur en insaturations éthyléniques dans la chaine | 0,7 milliéquivalent/g |
| viscosité ICI à 200°C | 2.500 mPa.s |
| température de transition vitreuse(DSC; 20°C/min) | 47 °C |
| $\overline{M}$n (GPC) | 4.013 |

Exemple 9.

Synthèse d'un polyester amorphe contenant des groupes méthacryloyle terminaux et des insaturations éthyléniques dans la chaine, en 3 stades.

1er stade

On procède de la même manière qu'à l'exemple 1, en introduisant 185,5 parties de néopentylglycol, 185,5 parties d'éthylène glycol et 2,2 parties de trioctoate de n-butylétain dans le réacteur. On chauffe le contenu du ballon jusqu'à 140°C, sous azote et avec agitation et on y ajoute 430,6 parties d'acide téréphtalique. On porte le mélange réactionnel à 230°C. L'eau de réaction commence à distiller à 190°C. Lorsque environ 95% de la quantité théorique d'eau ont distillé, le prépolymère est transparent.
Le polyester amorphe contenant des groupes hydroxyle ainsi obtenu présente les caractéristiques suivantes:

| | |
|---|---|
| indice d'acide | 2 mg de KOH/ g |
| indice d'hydroxyle | 345 mg de KOH/g |

2e stade

On laisse refroidir le mélange réactionnel à 180°C et on y ajoute 286,6 parties d'acide fumarique. Le mélange réactionnel est porté à 200°C, où on le maintient pendant deux heures; il est alors transparent; on y ajoute 0,9 partie de phosphite de tributyle et 0,15 partie de di-tert.-butylhydroquinone, et l'on applique progressivement un vide de 50 mm de mercure. Après trois heures à 200°C, et sous un vide de 50 mm de mercure, le polyester amorphe contenant des groupes carboxyle obtenu présente les caractéristiques suivantes:

| | |
|---|---|
| indice d'acide | 35 mg de KOH/ g |
| indice d'hydroxyle | 6 mg de KOH/g |
| viscosité ICI à 200°C | 4.000 mPa.s |

3e stade

Le polyester obtenu au 3e stade est refroidi à 150°C et on y ajoute 0,3 partie de di-tert.-butylhydroquinone et 4,6 parties de bromure d'ethyltriphénylphosphonium. On ajoute alors lentement à ce mélange 80,9 parties de méthacrylate de glycidyle, pendant une demi heure, et on laisse le mélange sous agitation pendant une heure à 150°C, sous oxygène. On obtient un polyester amorphe contenant des groupes mèthacryloyle terminaux et des insaturations éthyléniques dans la chaine qui présente les caractéristiques suivantes:

| | |
|---|---|
| indice d'acide | 1 mg de KOH/g |
| indice d'hydroxyle | 38 mg de KOH/g |
| teneur en insaturations méthacryliques terminales | 0,6 milliéquivalent/g |
| teneur en insaturations éthyléniques dans la chaine | 2,4 milliéquivalents/g |
| viscosité ICI à 200°C | 2.000 mPa.s |
| température de transition vitreuse(DSC; 20°C/min) | 45°C |
| $\overline{M}$n (GPC) | 3.490 |

Exemple 10.

Synthèse d'un polyester amorphe contenant des groupes méthacryloyle terminaux en 3 stades.

1er stade

On procède de la même manière qu'à l'exemple 1, en introduisant 347,6 parties de néopentylglycol, 14,3 parties de triméthylolpropane et 1,9 partie de trioctoate de n-butylétain dans le réacteur. On chauffe le contenu du ballon jusqu'à 140°C, sous azote et avec agitation et on y ajoute 513,2 parties d'acide téréphtalique. On porte le mélange réactionnel à 230°C. L'eau de réaction commence à distiller à 190°C. Lorsque environ 95% de la quantité théorique d'eau ont distillé, le prépolymère est transparent.
Le polyester amorphe contenant des groupes hydroxyle ainsi obtenu présente les caractéristiques suivantes:

| indice d'acide | 4 mg de KOH/ g |
|---|---|
| indice d'hydroxyle | 65 mg de KOH/g |

2e stade

On laisse refroidir le mélange réactionnel à 200°C et on y ajoute 133,2 parties d'acide isophtalique. Le mélange réactionnel est porté à 225°C, où on le maintient pendant deux heures; il est alors transparent; on y ajoute 0,9 partie de phosphite de tributyle. Après trois heures à 225°C, et sous un vide de 50 mm de mercure, le polyester amorphe contenant des groupes carboxyle obtenu présente les caractéristiques suivantes:

| indice d'acide | 47 mg de KOH/ g |
|---|---|
| indice d'hydroxyle | 3 mg de KOH/g |
| viscosité ICI à 200°C | 6.500 mPa.s |

3e stade

Le polyester obtenu au 2è stade est refroidi à 150°C et on y ajoute 0,7 partie de di-tert.-butylhydroquinone et 4,4 parties de bromure d'éthyltriphénylphosphonium. On ajoute alors lentement à ce mélange 112,1 parties de méthacrylate de glycidyle, pendant une demi heure, et on laisse le mélange sous agitation pendant une heure à 150°C, sous oxygène. On obtient un polyester amorphe contenant des groupes méthacryloyle terminaux qui présente les caractéristiques suivantes:

| indice d'acide | 1 mg de KOH/g |
|---|---|
| indice d'hydroxyle | 46 mg de KOH/g |
| teneur en insaturations méthacryliques terminales | 0,8 milliéquivalent/g |
| viscosité ICI à 175°C | 6.000 mPa.s |
| température de transition vitreuse (DSC; 20°C/min) | 46 °C |
| $\overline{M}n$ (GPC) | 2.910 |

Exemple 11 (comparatif)

Synthèse d'un polyester amorphe ne contenant que des insaturations éthyléniques dans la chaine, (sans groupes méthacryloyle terminaux) en 2 stades.

1er stade

On procède de la même manière qu'à l'exemple 1. en introduisant 170,0 parties de néopentylglycol, 170,0 parties d'éthylène glycol et 2,0 parties de trioctoate de n-butylétain dans le réacteur. On chauffe le contenu du ballon jusqu'à 140°C, sous azote et avec agitation et on y ajoute 395,0 parties d'acide téréphtalique. On porte le mélange réactionnel à 230°C. L'eau de réaction commence à distiller à 190°C. Lorsque environ 95% de la quantité théorique d'eau ont distillé, le prépolymère est transparent.
Le polyester amorphe contenant des groupes hydroxyle ainsi obtenu présente les caractéristiques suivantes:

| indice d'acide | 2 mg de KOH/ g |
|---|---|
| indice d'hydroxyle | 345 mg de KOH/g |

2e stade

On laisse refroidir le mélange réactionnel à 180°C et on y ajoute 262,6 parties d'acide fumarique. Le mélange réactionnel est porté à 200°C, où on le maintient pendant deux heures; il est alors transparent; on y ajoute 0.8 partie de phosphite de tributyle et 0,14 partie de di-tert.-butylhydroquinone et l'on applique progressivement un vide de 50 mm de mercure. Après trois heures à 200°C, et sous un vide de 50 mm de mercure, le polyester amorphe contenant des groupes carboxyle et des insaturations éthyléniques dans la chaine obtenu présente les caractéristiques suivantes:

| indice d'acide | 35 mg de KOH/g |
|---|---|
| indice d'hydroxyle | 6 mg de KOH/g |
| teneur en insaturations méthacryliques terminales | 0,0 milliéquivalent/g |
| teneur en insaturations éthyléniques dans la chaine | 2,4 milliéquivalents/ g |
| viscosité ICI à 200°C | 4.000 mPa.s |
| température de transition vitreuse(DSC; 20°C/min) | 48°C |

Exemple 12.

Synthèse d'un polyester semi-cristallin contenant des groupes méthacryloyle terminaux en 2 stades et son mélange avec un oligomère insaturé

1er stade

Un mélange de 186,1 parties d'éthylène glycol, de 749,9 parties d'acide 1,12-dodécanedioïque et de 2.19 parties de trioctoate de n-butylétain comme catalyseur est mis en réaction selon le procédé complet décrit au premier stade de l'exemple 2.
Le polyester semi-cristallin contenant des groupes carboxyle terminaux ainsi obtenu présente les caractéristiques suivantes:

| indice d'acide | 35 mg de KOH/g |
|---|---|
| indice d'hydroxyle | 3 mg de KOH/g |

2e stade

On laisse refroidir le polyester obtenu au 1er stade jusqu'à la température de 140°C et on y ajoute 0,5 partie de di-tert.-butylhydroquinone et 4,2 parties de chlorure de benzyltriphénylphosphonium. On ajoute alors lentement à ce mélange 73,7 parties de méthacrylate de glycidyle et on laisse le mélange sous agitation pendant une heure à 140°C, sous oxygène. On obtient un polyester semi-cristallin contenant des groupes méthacryloyle terminaux qui présente les caractéristiques suivantes:

| indice d'acide | 1,0 mg de KOH/g |
|---|---|
| indice d'hydroxyle | 33 mg de KOH/g |
| teneur en insaturations méthacryliques terminales | 0,6 milliéquivalent/g |
| viscosité ICI à 100°C | 200 mPa.s |
| température de fusion (DSC; 20°C/min) | 70 °C |
| $\overline{M}$n (GPC) | 3.490 |

Le polyester obtenu au 2è stade est refroidi à 85°C, et on y ajoute 91 parties d'un mélange de triacrylate de pentaérythritol et de tétra-acrylate de pentaérythritol, vendu par UCB, S.A. sous le nom de PETIA. Le mélange est placé sous agitation à 85°C, pendant une heure, sous oxygène. Ce mélange contient 91 parties du polyester pour 9 parties de l'oligomère.

Exemple 13

Préparation de compositions de revêtement en poudre, stabilité de ces compositions et propriétés des revêtements obtenus après durcissement par rayonnement.

A partir des polyesters semi-cristallins contenant des groupes méthacryloyle terminaux et des polyesters amorphes contenant seulement des groupes méthacryloyle terminaux, et/ou également, des insaturations éthyléniques dans la chaine, obtenus aux exemples 1 à 12, on prépare trois séries de poudres de formulation différente A, B et C. Dans ces formulations, on rapporte les parties en poids de l'ensemble des polyesters mis en oeuvre. Le tableau II indique le numéro de l'exemple de synthèse ainsi que la proportion de chaque polyester mis en oeuvre, par rapport à l'ensemble des polyesters:

A)

| | |
|---|---|
| Polyester semi-cristallin et/ou polyester amorphe | 96,65 parties |
| Photoinitiateur (IRGACURE 1800 de la société CIBA-GEIGY) | 2,50 parties |
| Agent régulateur de fluidité (BYK 356) | 0,5 partie |
| Agent de dégazage (Benzoïne) | 0,35 partie |

B)

| | |
|---|---|
| Polyester semi-cristallin et polyester amorphe | 69,40 parties |
| Dioxyde de titane (Kronos CL 2310) | 29.75 parties |
| Agent régulateur de fluidité (BYK 356) | 0,5 partie |
| Agent de dégazage (Benzoine) | 0,35 partie |

C)

| | |
|---|---|
| Polyester semi-cristallin et/ou polyester amorphe: | 72,49 parties |
| Photoinitiateur (mélange d'IRGACURE 2959 et D'IRGACURE 819-CIBA-GEIGY. dans un rapport en poids de 1/1) | 2,50 parties |
| Dioxyde de titane (Kronos CL 2310) | 24,16 parties |
| Agent régulateur de fluidité (BYK 356): | 0,5 partie |
| Agent de dégazage (Benzoïne): | 0,35 partie |

On prépare ces compositions en poudre en mélangeant à sec les polyesters et, pour les formulations A et C, les photoinitiateurs, avec les diverses substances auxiliaires utilisées conventionnellement pour la fabrication des peintures et vernis en poudre. Le mélange obtenu est homogénéisé à une température d'environ 80 à 100°C, dans une extrudeuse à double vis PRISM de 16 mm, avec L/D = 15 / 1 et l'extrudat est refroidi et broyé dans un broyeur RETSCH ZM 100, avec mailles de 0,5 mm. Pour terminer, la poudre est tamisée pour obtenir une dimension des particules comprise entre 20 et 100 micromètres.

Une partie des poudres est soumise au test de stabilité. Pour conduire ce test, on place 25 g de poudre dans un récipient de 100 ml. On place le récipient dans un bain d'eau, de manière à ce qu'il plonge dans l'eau jusqu'au 3/4 de sa hauteur.

Le test démarre au jour n° 1, l'eau du bain étant placée à 38°C. Après 24 heures et pendant 5 jours consécutifs, avec augmentation de la température selon le Tableau 1, on évalue l'agglomération de la poudre.

Tableau 1

| | T°C | Evaluation |
|---|---|---|
| jour 1 | 38 | jour 2 |
| jour 2 | 40 | jour 3 |
| jour 3 | 42 | jour 4 |
| jour 4 | 45 | jour 5 |

Chaque jour, une cotation entre 5 (excellent) et 0 (très mauvais) est donnée aux poudres, selon l'échelle suivante:

5: excellent, la poudre est fluide sans problème;
4: bon, la poudre est fluide avec un léger mouvement de la main;
3: acceptable, la poudre est fluide avec un mouvement de la main, mais quelques petits agglomérats sont présents;
2: mauvais, la poudre ne peut être fluidifiée qu'avec problèmes, beaucoup d'agglomérats étant présents;
0: très mauvais, la poudre ne peut pas être fluidifiée.
Au dernier jour de la période de test, une cotation sur l'agglomération de la poudre est donnée:
++: aucun agglomérat n'est présent;
+: quelques petits agglomérats sont présents qui peuvent être réduits en poudre par une légère pression;
+-: des agglomérats plus grands sont présents, qui peuvent être réduits en poudre par un légère pression;
-: agglomérats assez durs;
--: agglomérats durs;
---: un bloc s'est formé.

Les résultats sont repris au Tableau II.
Une autre partie des poudres formulées comme décrit ci-dessus est appliquée au moyen d'un pistolet pulvérisateur électrostatique sous une tension de 70 kV sur des panneaux en acier laminés à froid, non traités, en une épaisseur de film de 50 à 70 micromètres.
Les enduits de formulation A et C déposés subissent ensuite une fusion au moyen d'un rayonnement infrarouge de longueur d'onde moyenne (émetteur IR au carbone de HEREAUS, d'une densité d'irradiation de 80 kW/m$^2$), à la température de 130°C pendant une durée d'environ 4 minutes. Ensuite, on soumet les enduits à l'état fondu obtenus avec les poudres à une irradiation à la lumière ultraviolette émise par des lampes UV à vapeur de mercure à moyenne pression (DQ1023 de la société HERAEUS INSTRUMENTS GmbH) de 100 W / cm, à une distance de 15 cm et pendant une durée de 2 secondes.
Les enduits de formulation B sont fondus par IR de la même manière que les enduits de formulation A, mais à la température de 200°C pendant 30 secondes suivi par 3 minutes à 120°C. Ensuite, sous atmosphère d'azote, les enduits sont soumis à un faisceau d'électrons accélérés produit par une cathode linéaire de 170 KeV (de la société ENERGY SCIENCES Inc.).
On soumet les revêtements durcis ainsi obtenus aux tests classiques. Les résultats obtenus sont reportés dans le tableau II, dans lequel

- la première colonne identifie la composition testée;
- la deuxième colonne, le type de formulation utilisé;
- la troisième colonne, le numéro de l'exemple de synthèse du polyester semi-cristallin porteur de groupes méthacryloyle terminaux et sa quantité en % en poids par rapport au poids d'ensemble des polyesters;
- la quatrième colonne, le numéro de l'exemple de synthèse du polyester amorphe porteur seulement de groupes méthacryloyle terminaux et/ou également des insaturations éthyléniques dans la chaîne, et sa quantité en % en poids par rapport au poids d'ensemble des polyesters;
- la cinquième colonne, la valeur de la résistance au choc direct, en kg.cm, selon la norme ASTM D2795;
- la sixième colonne, la valeur de la résistance au choc inverse, en kg.cm, selon la norme ASTM D2795;
- la septième colonne, la valeur de la dureté au crayon sous un angle de 45°, avec une force de 7,5 newtons, mesurée selon la norme ASTM D3363-92A;
- la huitième colonne, la résistance à la méthyléthylcétone, qui correspond au nombre de doubles frottements (aller et retour) avec un tampon d'ouate imbibé de méthyléthylcétone, qui n'altère pas l'aspect de la surface du film durci;
- la neuvième colonne, une évaluation visuelle de l'enduit, selon laquelle, "bon" signifie que le revêtement durci possède un aspect lisse et brillant, sans défauts apparents tels que cratères, piqûres, etc., "moyen" signifie que le revêtement durci présente une légère peau d'orange avec une brillance mesurée sous un angle de 60° qui est inférieure à 90%; et
- la dixième colonne, la stabilité au stockage, évaluée comme expliqué ci-avant.

Ces résultats montrent clairement que les compositions en poudre conformes à l'invention (compositions (a) à (c), (f), (h) à (j), (l), (m), (o) et (p))à base d'un mélange d'un polyester semi-cristallin contenant des groupes méthacryloyle terminaux et d'un polyester amorphe contenant des groupes méthacryloyle terminaux, avec éventuellement, des insaturations éthyléniques dans la chaine (compositions (l) à (n) et (p)), donnent des enduits de peinture et de vernis qui possèdent des caractéristiques excellentes. En effet ces enduits présentent une dureté atteignant la valeur de 1H, et même 3H (compositions (m) et (p)), une flexibilité remarquable qui se traduit par une très bonne résistance aux chocs, et un excellent aspect de surface. Toutes ces propriétés sont obtenues à des températures de fusion aussi basses que 120-130°C.

Par ailleurs, les compositions conformes à l'invention sont très stables au stockage.

A l'inverse, un polyester amorphe porteur de groupes méthacryloyle terminaux formulé sans polyester semi-cristallin porteur de ces mêmes groupes, comme les compositions (e), (g), (k) et (n) de comparaison fournissent des enduits dont l'aspect visuel et la flexibilité (choc direct et inverse) sont médiocres. En outre, la composition de comparaison (d) n'est pas stable au stockage.

En comparant la composition (k) (comparative) avec les compositions (i) et (j) (selon l'invention), on voit également que l'utilisation d'un polyester semi-cristallin porteur de groupes méthacryloyle terminaux, conjointement avec un polyester amorphe porteur de groupes méthacryloyle terminaux dont la teneur en acide isophtalique est élevée (exemple 7), améliore la flexibilité (résistance au choc direct et inverse) aussi bien que l'aspect et la résistance aux solvants.

On voit également en comparant les compositions (c) et (h) avec les compositions (m) et (l) respectivement, que l'utilisation d'un acide dicarboxylique à insaturation éthylénique tel que l'acide fumarique, pour la synthèse du polyester amorphe contenant des groupes méthacryloyles terminaux, améliore la dureté au crayon et la résistance aux solvants. De telles compositions (voir aussi la composition (n)) donnent des propriétés en tout point remarquables aux revêtements qu'elles permettent de préparer (très bonne flexibilité, dureté, résistance aux solvants et très bon aspect).

On voit donc tout l'intérêt des compositions conformes à l'invention.

En outre, la comparaison de la composition (p) selon l'invention avec la composition (q) (comparative) montre la nécessité de la présence des groupes méthacryloyle terminaux pour obtenir des revêtements ayant de bonnes propriétés (le polyester amorphe de l'exemple 11 entrant dans la composition (q) ne comporte que des insaturations éthyléniques dans la chaine).

Tableau II

| Composition | Formulation | Polyester semi-cristallin: n° de l'exemple et quantité | Polyester amorphe: n° de l'exemple et quantité | Résistance choc direct | Résistance choc inverse | Dureté au crayon | MEK rubs | Evaluation visuelle | Stabilité au stockage |
|---|---|---|---|---|---|---|---|---|---|
| (a) | A | Exemple 1 30 | Exemple 3 70 | 180 | 180 | H | > 100 | bon | 5,4,3,3 + |
| (b) | A | Exemple 2 15 | Exemple 3 85 | 180 | 180 | H | > 100 | bon | 5,4,3,3+ |
| (c) | B | Exemple 2 15 | Exemple 3 85 | 140 | 140 | H | > 100 | bon | 5,4,3,3 + |
| (d)* | A | - | Exemple 4 100 | 160 | 140 | HB | > 100 | moyen | 3,2,2,0 -- |
| (e)* | C | - | Exemple 3 100 | 20 | 0 | H | 40 | moyen | 5,4,4,3+ |
| (f) | C | Exemple 5 30 | Exemple 3 70 | 180 | 180 | H | >100 | bon | 5,4,4,3+ |
| (g)* | C | - | Exemple 10 100 | 60 | 40 | H | 50 | moyen | 4,4,3,3+ |
| (h) | C | Exemple 6 15 | Exemple 10 85 | 180 | 160 | H | >100 | bon | 4,4,3,3+ |

EP 0 934 359 B1

Tableau II (suite)

| Composition | Formulation | Polyester semi-cristallin: n° de l'exemple et quantité | Polyester amorphe: n° de l'exemple et quantité | Résistance choc direct | Résistance choc inverse | Dureté au crayon | MEK rubs | Evaluation visuelle | Stabilité au stockage |
|---|---|---|---|---|---|---|---|---|---|
| (i) | A | Exemple 2 30 | Exemple 7 70 | 180 | 180 | H | >100 | bon | 5,4,3,3+ |
| (j) | A | Exemple 6 30 | Exemple 7 70 | 200 | 200 | H | >100 | bon | 5,4,3,3+ |
| (k)* | A | - | Exemple 7 100 | 0 | 0 | H | 80 | moyen | 5,4,4,3+ |
| (l) | C | Exemple 6 20 | Exemple 8 80 | 200 | 200 | 2H | >200 | bon | 5,4,4,3+ |
| (m) | A | Exemple 2 20 | Exemple 9 80 | 160 | 140 | 3H | >200 | bon | 5,4,4,3+ |
| (n)* | C | - | Exemple 8 100 | 40 | 20 | 2H | >100 | moyen | 5,4,4,3+ |
| (o) | C | Exemple 12 20 | Exemple 3 80 | 200 | 200 | H | 200 | bon | 5,4,4,3+ |
| (p) | A | Exemple 6 10 | Exemple 9 90 | 100 | 80 | 3H | >200 | bon | 4,4,4,3+- |

EP 0 934 359 B1

Tableau II (suite)

| Composition | Formulation | Polyester semi-cristallin: n° de l'exemple et quantité | Polyester amorphe: n° de l'exemple et quantité | Résistance choc direct | Résistance choc inverse | Dureté au crayon | MEK rubs | Evaluation visuelle | Stabilité au stockage |
|---|---|---|---|---|---|---|---|---|---|
| (q)* | A | Exemple 6 10 | Exemple 11 90 | 20 | 20 | H | >100 | moyen | 4,4,3,3+- |

\* Les compositions (d), (e), (g), (k), (n) et (q), marquées par \*, sont testées à titre de comparaison.

EP 0 934 359 B1

## EP 0 934 359 B1

**Revendications**

1. Compositions en poudre durcissables par rayonnement **caractérisées en ce qu'**elles comprennent un mélange d'au moins un polyester semi-cristallin contenant des groupes méthacryloyle terminaux et d'au moins un polyester amorphe contenant des groupes méthacryloyle terminaux, comprenant les produits de réaction d'un méthacrylate de glycidyle et d'un polyester semi-cristallin ou amorphe contenant des groupes carboxyle terminaux, ledit polyester semi-cristallin contenant des groupes carboxyle terminaux étant choisi parmi

   (a) un polyester qui est le produit de réaction de

   (1) un constituant acide qui contient (a. 1.1) 85 à 100 moles % d'acide téréphtalique, d'acide 1,4-cyclohexanedicarboxylique ou d'acide 1,12-dodécanedioique et (a. 1.2) 0 à 15 moles % d'au moins un autre acide di- ou polycarboxylique aliphatique, cycloaliphatique ou aromatique ayant de 4 à 14 atomes de carbone, et
   (2) un constituant alcoolique qui contient (a.2.1) 85 à 100 moles % d'un diol aliphatique saturé à chaine droite ayant de 2 à 12 atomes de carbone et (a.2.2) 0 à 15 moles % d'au moins un autre di- ou polyol aliphatique ou cycloaliphatique ayant de 2 à 15 atomes de carbone; et

   (b) un polyester qui est le produit de réaction de

   (1) un constituant acide qui contient (b.1.1) 85 à 100 moles % d'un acide dicarboxylique aliphatique saturé à chaine droite ayant de 4 à 14 atomes de carbone et (b.1.2) 0 à 15 moles % d'au moins un autre acide di- ou polycarboxylique aliphatique, cycloaliphatique ou aromatique ayant de 4 à 14 atomes de carbone, et,
   (2) un constituant alcoolique qui contient (b.2.1) 85 à 100 moles % de 1,4-cyclohexanediol ou de 1,4-cyclohexanediméthanol et (b.2.2) 0 à 15 moles % d'au moins un autre di- ou polyol aliphatique ou cycloaliphatique ayant de 2 à 15 atomes de carbone;

   et ledit polyester amorphe contenant des groupes carboxyle terminaux étant constitué du

   (c) produit de réaction de

   (1) un constituant acide qui contient (c. 1. 1) 40 à 100 moles % d'acide téréphtalique ou d'acide isophtalique et (c.1.2) 0 à 60 moles % d'un autre acide di- ou polycarboxylique aliphatique, cycloaliphatique ou aromatique ayant de 4 à 14 atomes de carbone, avec
   (2) un constituant alcoolique qui contient (c.2.1) 35 à 100 moles % de néopentylglycol et (c.2.2) 0 à 65 moles % d'un autre di- ou polyol aliphatique ou cycloaliphatique ayant de 2 à 15 atomes de carbone.

2. Compositions selon la revendication 1, **caractérisée en ce que** ledit polyester amorphe contenant des groupes carboxyle terminaux (c) est constitué ,de préférence, du produit de réaction de

   (1) un constituant acide qui contient (c. 1. 1) 80 à 100 moles % d'acide téréphtalique ou d'acide isophtalique et (c. 1.2) 0 à 20 moles % d'un autre acide di- ou polycarboxylique aliphatique. cycloaliphatique ou aromatique ayant de 4 à 14 atomes de carbone, avec
   (2) un constituant alcoolique qui contient (c.2.1) 60 à 100 moles % de néopentylglycol et (c.2.2) 0 à 40 moles % d'un autre di- ou polyol aliphatique ou cycloaliphatique ayant de 2 à 15 atomes de carbone.

3. Compositions selon l'une quelconque des revendications 1 ou 2, **caractérisées en ce que** l'acide di- ou polycarboxylique (a.1.2) est choisi parmi l'acide maléique, l'acide fumarique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque, l'acide sébacique, l'acide trimellitique, l'acide pyromellitique et leurs anhydrides, seuls ou en mélange.

4. Compositions selon l'une quelconque des revendications 1 à 3, **caractérisées en ce que** le diol aliphatique saturé à chaine droite (a.2.1) est choisi parmi l'éthylène glycol, le 1,4-butanediol, le 1,5-pentanediol et le 1,6-hexanediol.

5. Compositions selon l'une quelconque des revendications 1 à 4, **caractérisées en ce que** le di- ou polyol aliphatique ou cycloaliphatique (a.2.2) est choisi parmi le 1,4-cyclohexanediol, le 1,4-cyclohexanediméthanol, le bisphénol A hydrogéné, le triméthylolpropane, le ditriméthylolpropane, le triméthyloléthane, le pentaérythritol et leurs mélanges.

6. Compositions selon l'une quelconque des revendications 1 à 5, **caractérisées en ce que** l'acide dicarboxylique aliphatique saturé à chaine droite (b.1.1) est choisi parmi l'acide succinique, l'acide glutarique, l'acide adipique, l'acide pimélique, l'acide subérique, l'acide azélaïque, l'acide sébacique, l'acide 1, 12-dodécanedioique et leurs anhydrides, seuls ou en mélange.

7. Compositions selon l'une quelconque des revendications 1 à 6, **caractérisées en ce que** l'acide di- ou polycarboxylique (b.1.2) est choisi parmi l'acide maléique, l'acide fumarique, l'acide phtalique, l'acide téréphtalique, l'acide isophtalique, l'acide 1,2-cyclohexanedicarboxylique, l'acide 1,3-cyclohexanedicarboxylique, l'acide 1,4-cyclohexanedicarboxylique, l'acide trimellitique, l'acide pyromellitique et leurs anhydrides, seuls ou en mélange.

8. Compositions selon l'une quelconque des revendications 1 à 7, **caractérisées en ce que** le di- ou polyol aliphatique ou cycloaliphatique (b.2.2) est choisi parmi l'éthylène glycol, le propylène glycol, le 1,4-butanediol, le 1,5-pentanediol, le 1,6-hexanediol, le 1,4-cyclohexanediol, le 1,4-cyciohexanediméthanol, le bisphénol A hydrogéné, le triméthylolpropane, le ditriméthylolpropane, le triméthyloléthane, le pentaérythritol et leurs mélanges.

9. Compositions selon l'une quelconque des revendications 1 à 8, **caractérisées en ce que** ledit polyester semi-cristallin contenant des groupes méthacryloyle terminaux présente un degré d'insaturation terminale de 0,17 à 2,0, de préférence de 0,35 à 1,50 milliéquivalent de doubles liaisons par gramme de polyester.

10. Compositions selon l'une quelconque des revendications 1 à 9, **caractérisées en ce que** ledit polyester semi-cristallin contenant des groupes méthacryloyle terminaux possède un poids moléculaire moyen en nombre compris entre 1.000 et 20.000, de préférence entre 1.400 et 8.500.

11. Compositions selon l'une quelconque des revendications 1 à 10, **caractérisées en ce que** ledit polyester semi-cristallin contenant des groupes méthacryloyle terminaux présente une température de fusion de 60 à 150°C.

12. Compositions selon l'une quelconque des revendications 1 à 11, **caractérisées en ce que** l'acide di- ou polycarboxylique aliphatique, cycloaliphatique ou aromatique ayant de 4 à 14 atomes de carbone (c.1.2) est choisi parmi l'acide maléique, l'acide fumarique, l'acide tétrahydrophtalique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque, l'acide sébacique, l'acide trimellitique, l'acide pyromellitique et leurs anhydrides, de préférence les acides fumarique, maléique et tétrahydrophtalique, seuls ou en mélange.

13. Compositions selon l'une quelconque des revendications 1 à 12. **caractérisées en ce que** le di- ou polyol aliphatique ou cycloaliphatique ayant de 2 à 15 atomes de carbone (c.2.2) est choisi parmi l'éthylène glycol, le diéthylène glycol, le propylène glycol, le 1,4-butanediol, le 1,6-hexanediol, le 1,4-cyclohexanediméthanol, le 2-méthyl-1,3-propanediol, le bisphénol A hydrogéné, l'hydroxypivalate de néopentylglycol, le triméthylolpropane, le ditriméthylolprapane, le triméthyloiéthane, le pentaérythritol et leurs mélanges.

14. Compositions selon l'une quelconque des revendications 1 à 13, **caractérisées en ce que** ledit un polyester amorphe contenant des groupes méthacryloyle terminaux présente un degré d'insaturation méthacrylique terminale de 0,17 à 1,5, de préférence de 0,35 à 1,25 milliéquivalent de doubles liaisons par gramme de polyester.

15. Compositions selon l'une quelconque des revendications 1 à 14, **caractérisées en ce que** ledit polymère amorphe contenant des groupes méthacryloyle terminaux présente un degré d'insaturation éthylénique dans la chaine du polyester de 0 à 3,5, de préférence de 0 à 1,0 milliéquivalent de doubles liaisons par gramme de polyester.

16. Compositions selon l'une quelconque des revendications 1 à 15, **caractérisées en ce que** le polyester amorphe contenant des groupes méthacryloyle terminaux présente une fonctionnalité comprise entre 2 et 4.

17. Compositions selon l'une quelconque des revendications 1 à 16, **caractérisées en ce que** le polyester amorphe contenant des groupes méthacryloyle terminaux possède un poids moléculaire moyen en nombre compris entre 1.100 et 9.000, de préférence entre 1.300 et 8.500.

**18.** Compositions selon l'une quelconque des revendications 1 à 17, **caractérisées en ce que** le polyester amorphe contenant des groupes méthacryloyle terminaux présente une température de transition vitreuse allant de 45 à 80°C.

**19.** Compositions selon l'une quelconque des revendications 1 à 18, **caractérisées en ce que** le mélange des polyesters contient 5 à 50, de préférence 5 à 35 parties en poids du polyester semi-cristallin contenant des groupes méthacryloyle terminaux, et 50 à 95, de préférence 65 à 95 parties en poids du polyester amorphe contenant des groupes méthacryloyle terminaux, par rapport au poids total des polyesters.

**20.** Compositions selon l'une quelconque des revendications 1 à 19, **caractérisées en ce qu'**un méthacrylate de glycidyle est choisi parmi le méthacrylate de glycidyle et le méthacrylate de β-méthylglycidyle.

**21.** Compositions selon l'une quelconque des revendications 1 à 20, **caractérisées en ce qu'**elles sont exemptes d'agent de réticulation et de catalyseur.

**22.** Compositions selon l'une quelconque des revendications 1 à 21, **caractérisées en ce qu'**elles comprennent, en plus, un oligomère éthyléniquement insaturé.

**23.** Compositions selon la revendication 22, **caractérisées en ce que** l'oligomère éthyléniquement insaturé est le triacrylate ou le triméthacrylate de l'isocyanurate de tris(2-hydroxyéthyle), de préférence, le triacrylate de l'isocyanurate de tris(2-hydroxyéthyle).

**24.** Compositions selon l'une quelconque des revendications 22 ou 23, **caractérisées en ce qu'**elles comprennent pour 100 parties en poids, jusqu'à 20 parties en poids, de préférence jusqu'à 10 parties en poids de l'oligomère éthyléniquement insaturé.

**25.** Compositions durcissables par irradiation ultraviolette selon l'une quelconque des revendications 1 à 24, **caractérisées en ce qu'**elles comprennent, en plus, un photoinitiateur et éventuellement un photoactivateur.

**26.** Compositions selon la revendication 25, **caractérisées en ce qu'**elles comprennent pour 100 parties en poids, jusqu'à 15 parties en poids, de préférence de 1,5 à 8 parties en poids de photoinitiateur.

**27.** Procédé de revêtement d'un article, **caractérisé en ce qu'**on applique sur ledit article une composition en poudre durcissable par rayonnement selon l'une quelconque des revendications 1 à 26, par dépôt par pulvérisation au pistolet électrostatique ou tribo-électrique ou par dépôt en lit fluidisé, **en ce qu'**on fait fondre le revêtement ainsi obtenu par chauffage à une température de 100 à 150°C, pendant une durée d'environ 1 à 5 minutes et **en ce que** l'on expose ensuite ledit revêtement à l'état fondu à des rayons ultraviolets ou à des faisceaux d'électrons accélérés pendant une durée suffisante pour former un revêtement durci.

**28.** Vernis et peintures en poudre durcissables par irradiation avec un faisceau d'électrons accélérés, obtenus à partir de compositions selon l'une quelconque des revendications 1 à 24.

**29.** Vernis et peintures en poudre durcissables par irradiation ultraviolette, obtenus à partir de compositions selon l'une quelconque des revendications 1 à 26.

**30.** Articles revêtus entièrement ou partiellement de vernis et/ou de peintures selon l'une quelconque des revendications 27 à 29.

**Claims**

**1.** Powder compositions which can be cured by radiation, **characterized in that** they comprise a mixture of at least one semi-crystalline polyester containing terminal methacryloyl groups and at least one amorphous polyester containing terminal methacryloyl groups, comprising the reaction products of a glycidyl methacrylate and a semi-crystalline or amorphous polyester containing terminal carboxyl groups, the said semi-crystalline polyester containing terminal carboxyl groups being chosen from

    (a) a polyester which is the reaction product of

(1) an acid constituent which comprises (a.1.1) 85 to 100 mol% of terephthalic acid, 1,4-cyclohexanedicarboxylic acid or 1,12-dodecanedioic acid and (a.1.2) 0 to 15 mol% of at least one other aliphatic, cycloaliphatic or aromatic di- or polycarboxylic acid having 4 to 14 carbon atoms and

(2) an alcohol constituent which comprises (a.2.1) 85 to 100 mol% of a saturated straight-chain aliphatic diol having 2 to 12 carbon atoms and (a.2.2) 0 to 15 mol% of at least one other aliphatic or cycloaliphatic di- or polyol having 2 to 15 carbon atoms; and

(b) a polyester which is the reaction product of

(1) an acid constituent which comprises (b.1.1) 85 to 100 mol% of a saturated straight-chain aliphatic dicarboxylic acid having 4 to 14 carbon atoms and (b.1.2) 0 to 15 mol% of at least one other aliphatic, cycloaliphatic or aromatic di- or polycarboxylic acid having 4 to 14 carbon atoms and

(2) an alcohol constituent which comprises (b.2.1) 85 to 100 mol% of 1,4-cyclohexanediol or 1,4-cyclohexanedimethanol and (b.2.2) 0 to 15 mol% of at least one other aliphatic or cycloaliphatic di- or polyol having 2 to 15 carbon atoms;

and the said amorphous polyester containing terminal carboxyl groups comprising
(c) the reaction product of

(1) an acid constituent which comprises (c.1.1) 40 to 100 mol% of terephthalic acid or isophthalic acid and (c.1.2) 0 to 60 mol% of another aliphatic, cycloaliphatic or aromatic di- or polycarboxylic acid having 4 to 14 carbon atoms with

(2) an alcohol constituent which comprises (c.2.1) 35 to 100 mol% of neopentylglycol and (c.2.2) 0 to 65 mol% of another aliphatic or cycloaliphatic di- or polyol having 2 to 15 carbon atoms.

2. Compositions according to claim 1, **characterized in that** the said amorphous polyester (c) containing terminal carboxyl groups preferably comprises the reaction product of

(1) an acid constituent which comprises (c.1.1) 80 to 100 mol% of terephthalic acid or isophthalic acid and (c.1.2) 0 to 20 mol% of another aliphatic, cycloaliphatic or aromatic di- or polycarboxylic acid having 4 to 14 carbon atoms with

(2) an alcohol constituent which comprises (c.2.1) 60 to 100 mol% of neopentylglycol and (c.2.2) 0 to 40 mol% of another aliphatic or cycloaliphatic di- or polyol having 2 to 15 carbon atoms.

3. Compositions according to any one of claims 1 or 2, **characterized in that** the di- or polycarboxylic acid (a.1.2) is chosen from maleic acid, fumaric acid, isophthalic acid, phthalic acid, terephthalic acid, 1,2-cyclohexanedicarboxylic acid, 1,3-cyclohexanedicarboxylic acid, 1,4-cyclohexanedicarboxylic acid, succinic acid, glutaric acid, adipic acid, pimelic acid, suberic acid, azelaic acid, sebacic acid, trimellitic acid, pyromellitic acid and their anhydrides, by themselves or in a mixture.

4. Compositions according to any one of claims 1 to 3, **characterized in that** the saturated straight-chain aliphatic diol (a.2.1) is chosen from ethylene glycol, 1,4-butanediol, 1,5-pentanediol and 1,6-hexanediol.

5. Compositions according to any one of claims 1 to 4, **characterized in that** the aliphatic or cycloaliphatic di-or polyol (a.2.2) is chosen from 1,4-cyclohexanediol, 1,4-cyclohexanedimethanol, hydrogenated bisphenol A, trimethylolpropane, ditrimethylolpropane, trimethylolethane, pentaerythritol and their mixtures.

6. Compositions according to any one of claims 1 to 5, **characterized in that** the saturated straight-chain aliphatic dicarboxylic acid (b.1.1) is chosen from succinic acid, glutaric acid, adipic acid, pimelic acid, suberic acid, azelaic acid, sebacic acid, 1,12-dodecanedioic acid and their anhydrides, by themselves or in a mixture.

7. Compositions according to any one of claims 1 to 6, **characterized in that** the di- or polycarboxylic acid (b.1.2) is chosen from maleic acid, fumaric acid, phthalic acid, terephthalic acid, isophthalic acid, 1,2-cyclohexanedicarboxylic acid, 1,3-cyclohexanedicarboxylic acid, 1,4-cyclohexanedicarboxylic acid, trimellitic acid, pyromellitic acid and their anhydrides, by themselves or in a mixture.

8. Compositions according to any one of claims 1 to 7, **characterized in that** the aliphatic or cycloaliphatic di-or polyol (b.2.2) is chosen from ethylene glycol, propylene glycol, 1,4-butanediol, 1,5-pentanediol, 1,6-hexanediol, 1,4-cyclohexanediol, 1,4-cyclohexanedimethanol, hydrogenated bisphenol A, trimethylolpropane, ditrimethylolpropane, trimethylolethane, pentaerythritol and their mixtures.

9. Compositions according to any one of claims 1 to 8, **characterized in that** the said semi-crystalline polyester containing terminal methacryloyl groups has a degree of terminal unsaturation of 0.17 to 2.0, preferably 0.35 to 1.50 milliequivalents of double bonds per gram of polyester.

10. Compositions according to any one of claims 1 to 9, **characterized in that** the said semi-crystalline polyester containing terminal methacryloyl groups has a number-average molecular weight of between 1,000 and 20,000, preferably between 1,400 and 8,500.

11. Compositions according to any one of claims 1 to 10, **characterized in that** the said semi-crystalline polyester containing terminal methacryloyl groups has a melting point of 60 to 150°C.

12. Compositions according to any one of claims 1 to 11, **characterized in that** the aliphatic, cycloaliphatic or aromatic di- or polycarboxylic acid having 4 to 14 carbon atoms (c.1.2) is chosen from maleic acid, fumaric acid, tetrahydrophthalic acid, isophthalic acid, phthalic acid, terephthalic acid, 1,2-cyclohexanedicarboxylic acid, 1,3-cyclohexanedicarboxylic acid, 1,4-cyclohexanedicarboxylic acid, succinic acid, glutaric acid, adipic acid, pimelic acid, suberic acid, azelaic acid, sebacic acid, trimellitic acid, pyromellitic acid and their anhydrides, preferably fumaric, maleic and tetrahydrophthalic acid, by themselves or in a mixture.

13. Compositions according to any one of claims 1 to 12, **characterized in that** the aliphatic or cycloaliphatic di-or polyol having 2 to 15 carbon atoms (c.2.2) is chosen from ethylene glycol, diethylene glycol, propylene glycol, 1,4-butanediol, 1,6-hexanediol, 1,4-cyclohexanedimethanol, 2-methyl-1,3-propanediol, hydrogenated bisphenol A, neopentylglycol hydroxypivalate, trimethylolpropane, ditrimethylolpropane, trimethylolethane, pentaerythritol and their mixtures.

14. Compositions according to any one of claims 1 to 13, **characterized in that** the said amorphous polyester containing terminal methacryloyl groups has a degree of terminal methacrylic unsaturation of 0.17 to 1.5, preferably 0.35 to 1.25 milliequivalents of double bonds per gram of polyester.

15. Compositions according to any one of claims 1 to 14, **characterized in that** the said amorphous polymer containing terminal methacryloyl groups has a degree of ethylenic unsaturation in the polyester chain of 0 to 3.5, preferably 0 to 1.0 milliequivalent of double bonds per gram of polyester.

16. Compositions according to any one of claims 1 to 15, **characterized in that** the amorphous polyester containing terminal methacryloyl groups has a functionality of between 2 and 4.

17. Compositions according to any one of claims 1 to 16, **characterized in that** the amorphous polyester containing terminal methacryloyl groups has a number-average molecular weight of between 1,100 and 9,000, preferably between 1,300 and 8,500.

18. Compositions according to any one of claims 1 to 17, **characterized in that** the amorphous polyester containing terminal methacryloyl groups has a glass transition temperature ranging from 45 to 80°C.

19. Compositions according to any one of claims 1 to 18, **characterized in that** the mixture of polyesters comprises 5 to 50, preferably 5 to 35 parts by weight of the semi-crystalline polyester containing terminal methacryloyl groups and 50 to 95, preferably 65 to 95 parts by weight of the amorphous polyester containing terminal methacryloyl groups, based on the total weight of the polyesters.

20. Compositions according to any one of claims 1 to 19, **characterized in that** the glycidyl methacrylate is chosen from glycidyl methacrylate and β-methylglycidyl methacrylate.

21. Compositions according to any one of claims 1 to 20, **characterized in that** they are free from crosslinking agent and catalyst.

22. Compositions according to any one of claims 1 to 21, **characterized in that** they additionally comprise an ethylenically unsaturated oligomer.

23. Compositions according to claim 22, **characterized in that** the ethylenically unsaturated oligomer is tris(2-hydroxyethyl) isocyanurate triacrylate or trimethacrylate, preferably tris(2-hydroxyethyl) isocyanurate triacrylate.

24. Compositions according to any one of claims 22 or 23, **characterized in that** they comprise up to 20 parts by weight, preferably up to 10 parts by weight of the ethylenically unsaturated oligomer per 100 parts by weight.

25. Compositions according to any one of claims 1 to 24 which can be cured by ultraviolet irradiation, **characterized in that** they additionally comprise a photoinitiator and optionally a photoactivator.

26. Compositions according to claim 25, **characterized in that** they comprise up to 15 parts by weight, preferably 1.5 to 8 parts by weight of photoinitiator per 100 parts by weight.

27. Process for coating an article, **characterized in that** a powder composition according to any one of claims 1 to 26 which can be cured by radiation is applied to the said article by deposition by spraying with an electrostatic or triboelectric gun or by deposition in a fluidized bed, and **in that** the coating obtained in this way is melted by heating at a temperature of 100 to 150°C for a period of about 1 to 5 minutes, and **in that** the said coating in the molten state is then exposed to ultraviolet rays or to accelerated electron beams for a period sufficient to form a cured coating.

28. Powder varnishes and paints which can be cured by irradiation with an accelerated electron beam, obtained from compositions according to any one of claims 1 to 24.

29. Powder varnishes and paints which can be cured by ultraviolet irradiation, obtained from compositions according to any one of claims 1 to 26.

30. Articles completely or partly coated with varnishes and/or paints according to any one of claims 27 to 29.

**Patentansprüche**

1. Strahlungshärtbare pulverförmige Zusammensetzungen, **dadurch gekennzeichnet, dass** sie ein Gemisch von wenigstens einem semikristallinen Polyester mit Methacryloylendgruppen und wenigstens einem amorphen Polyester mit Methacryloylendgruppen umfassen, die die Reaktionsprodukte eines Glycidylmethacrylats und eines semikristallinen oder amorphen Polyesters mit Carboxylendgruppen umfassen, wobei besagter semikristalliner Polyester mit Carboxylendgruppen ausgewählt ist unter

(a) einem Polyester, der das Produkt der Reaktion ist von

(1) einem sauren Bestandteil, der (a.1.1) 85 bis 100 Mol-% Terephthalsäure, 1,4-Cyclohexandicarbonsäure oder 1,12-Dodecandisäure und (a.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und
(2) einem alkoholischen Bestandteil, der (a.2.1) 85 bis 100 Mol-% eines gesättigten aliphatischen Diols mit gerader Kette mit 2 bis 12 Kohlenstoffatomen und (a.2.2) 0 bis 15 Mol-% wenigstens eines weiteren aliphatischen oder cycloaliphatischen Di- oder Polyols mit 2 bis 15 Kohlenstoffatomen enthält; und

(b) einem Polyester, der das Produkt der Reaktion ist von

(1) einem sauren Bestandteil, der (b.1.1) 85 bis 100 Mol-% einer gesättigten aliphatischen Dicarbonsäure mit gerader Kette mit 4 bis 14 Kohlenstoffatomen und (b.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und
(2) einem alkoholischen Bestandteil, der (b.2.1) 85 bis 100 Mol-% 1,4-Cyclohexandiol oder 1,4-Cyclohexandimethanol und (b.2.2) 0 bis 15 Mol-% wenigstens eines weiteren aliphatischen oder cycloaliphatischen Di- oder Polyols mit 2 bis 15 Kohlenstoffatomen enthält;

und besagter amorpher Polyester mit Carboxylendgruppen besteht aus dem
(c) Produkt der Reaktion von

(1) einem sauren Bestandteil, der (c.1.1) 40 bis 100 Mol-% Terephthalsäure oder Isophthalsäure und (c. 1.2) 0 bis 60 Mol-% einer weiteren aliphatischen, cycloaliphatischen oder aromatischen Di- oder Polycarbonsäure mit 4 bis 14 Kohlenstoffatomen enthält, mit

(2) einem alkoholischen Bestandteil, der (c.2.1) 35 bis 100 Mol-% Neopentylglykol und (c.2.2) 0 bis 65 Mol-% eines weiteren aliphatischen oder cycloaliphatischen Di- oder Polyols mit 2 bis 15 Kohlenstoffatomen enthält.

**2.** Zusammensetzungen gemäß Anspruch 1, **dadurch gekennzeichnet, dass** besagter amorpher Polyester mit Carboxylendgruppen (c) vorzugsweise besteht aus dem Produkt der Reaktion von

(1) einem sauren Bestandteil, der (c.1.1) 80 bis 100 Mol-% Terephthalsäure oder Isophthalsäure und (c.1.2) 0 bis 20 Mol-% einer weiteren aliphatischen, cycloaliphatischen oder aromatischen Di- oder Polycarbonsäure mit 4 bis 14 Kohlenstoffatomen enthält, mit

(2) einem alkoholischen Bestandteil, der (c.2.1) 60 bis 100 Mol-% Neopentylglykol und (c.2.2) 0 bis 40 Mol-% eines weiteren aliphatischen oder cycloaliphatischen Di- oder Polyols mit 2 bis 15 Kohlenstoffatomen enthält.

**3.** Zusammensetzungen gemäß einem der Ansprüche 1 oder 2, **dadurch gekennzeichnet, dass** die Di- oder Polycarbonsäure (a.1.2) unter Maleinsäure, Fumarsäure, Isophthalsäure, Phthalsäure, Terephthalsäure, 1,2-Cyclohexandicarbonsäure, 1,3-Cyclohexandicarbonsäure, 1,4-Cyclohexandicarbonsäure, Bernsteinsäure, Glutarsäure, Adipinsäure, Pimelinsäure, Suberinsäure, Azelainsäure, Sebacinsäure, Trimellitsäure, Pyromellitsäure und ihren Anhydriden, allein oder im Gemisch, ausgewählt ist.

**4.** Zusammensetzungen gemäß einem der Ansprüche 1 bis 3, **dadurch gekennzeichnet, dass** das gesättigte aliphatische Diol mit gerader Kette (a.2.1) unter Ethylenglykol, 1,4-Butandiol, 1,5-Pentandiol und 1,6-Hexandiol ausgewählt ist.

**5.** Zusammensetzungen gemäß einem der Ansprüche 1 bis 4, **dadurch gekennzeichnet, dass** das aliphatische oder cycloaliphatische Di- oder Polyol (a.2.2) unter 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

**6.** Zusammensetzungen gemäß einem der Ansprüche 1 bis 5, **dadurch gekennzeichnet, dass** die gesättigte aliphatische Dicarbonsäure mit gerader Kette (b.1.1) unter Bernsteinsäure, Glutarsäure, Adipinsäure, Pimelinsäure, Suberinsäure, Azelainsäure, Sebacinsäure, 1,12-Dodecandisäure und ihren Anhydriden, allein oder im Gemisch, ausgewählt ist.

**7.** Zusammensetzungen gemäß einem der Ansprüche 1 bis 6, **dadurch gekennzeichnet, dass** die Di- oder Polycarbonsäure (b.1.2) unter Maleinsäure, Fumarsäure, Phthalsäure, Terephthalsäure, Isophthalsäure, 1,2-Cyclohexandicarbonsäure, 1,3-Cyclohexandicarbonsäure, 1,4-Cyclohexandicarbonsäure, Trimellitsäure, Pyromellitsäure und ihren Anhydriden, allein oder im Gemisch, ausgewählt ist.

**8.** Zusammensetzungen gemäß einem der Ansprüche 1 bis 7, **dadurch gekennzeichnet, dass** das aliphatische oder cycloaliphatische Di- oder Polyol (b.2.2) unter Ethylenglykol, Propylenglykol, 1,4-Butandiol, 1,5-Pentandiol, 1,6-Hexandiol, 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

**9.** Zusammensetzungen gemäß einem der Ansprüche 1 bis 8, **dadurch gekennzeichnet, dass** besagter semikristalliner Polyester mit Methacryloylendgruppen in einem Grad von 0,17 bis 2,0, vorzugsweise von 0,35 bis 1,50 Milliäquivalenten Doppelbindungen pro Gramm Polyester endständig ungesättigt ist.

**10.** Zusammensetzungen gemäß einem der Ansprüche 1 bis 9, **dadurch gekennzeichnet, dass** besagter semikristalliner Polyester mit Methacryloylendgruppen ein Zahlenmittel des Molekulargewichts zwischen 1.000 und 20.000, vorzugsweise zwischen 1.400 und 8.500 besitzt.

**11.** Zusammensetzungen gemäß einem der Ansprüche 1 bis 10, **dadurch gekennzeichnet, dass** besagter semikristalliner Polyester mit Methacryloylendgruppen eine Schmelztemperatur von 60 bis 150 °C aufweist.

12. Zusammensetzungen gemäß einem der Ansprüche 1 bis 11, **dadurch gekennzeichnet, dass** die aliphatische, cycloaliphatische oder aromatische Di- oder Polycarbonsäure mit 4 bis 14 Kohlenstoffatomen (c.1.2) unter Maleinsäure, Fumarsäure, Tetrahydrophthalsäure, Isophthalsäure, Phthalsäure, Terephthalsäure, 1,2-Cyclohexandicarbonsäure, 1,3-Cyclohexandicarbonsäure, 1,4-Cyclohexandicarbonsäure, Bernsteinsäure, Glutarsäure, Adipinsäure, Pimelinsäure, Suberinsäure, Azelainsäure, Sebacinsäure, Trimellitsäure, Pyromellitsäure und ihren Anhydriden, vorzugsweise Fumar-, Malein- und Tetrahydrophthalsäure, allein oder im Gemisch, ausgewählt ist.

13. Zusammensetzungen gemäß einem der Ansprüche 1 bis 12, **dadurch gekennzeichnet, dass** das aliphatische oder cycloaliphatische Di- oder Polyol mit 2 bis 15 Kohlenstoffatomen (c.2.2) unter Ethylenglykol, Diethylenglykol, Propylenglykol, 1,4-Butandiol, 1,6-Hexandiol, 1,4-Cyclohexandimethanol, 2-Methyl-1,3-propandiol, hydriertem Bisphenol A, Neopentylglykolhydroxypivalat, Trimethylolpropan, Ditrimethylolpropan, Trimethylolethan, Pentaerythrit und ihren Gemischen ausgewählt ist.

14. Zusammensetzungen gemäß einem der Ansprüche 1 bis 13, **dadurch gekennzeichnet, dass** der besagte eine amorpher Polyester mit Methacryloylendgruppen in einem Grad von 0,17 bis 1,5, vorzugsweise von 0,35 bis 1,25 Milliäquivalenten Doppelbindungen pro Gramm Polyester endständig methacrylisch ungesättigt ist.

15. Zusammensetzungen gemäß einem der Ansprüche 1 bis 14, **dadurch gekennzeichnet, dass** besagtes amorphes Polymer mit Methacryloylendgruppen in einem Grad von 0 bis 3,5, vorzugsweise von 0 bis 1,0 Milliäquivalenten Doppelbindungen pro Gramm Polyester in der Kette des Polyesters ethylenisch ungesättigt ist.

16. Zusammensetzungen gemäß einem der Ansprüche 1 bis 15, **dadurch gekennzeichnet, dass** der amorphe Polyester mit Methacryloylendgruppen eine Funktionalität zwischen 2 und 4 aufweist.

17. Zusammensetzungen gemäß einem der Ansprüche 1 bis 16, **dadurch gekennzeichnet, dass** der amorphe Polyester mit Methacryloylendgruppen ein Zahlenmittel des Molekulargewichts zwischen 1.100 und 9.000, vorzugsweise zwischen 1.300 und 8.500 besitzt.

18. Zusammensetzungen gemäß einem der Ansprüche 1 bis 17, **dadurch gekennzeichnet, dass** der amorphe Polyester mit Methacryloylendgruppen eine Glasübergangstemperatur von 45 bis 80 °C aufweist.

19. Zusammensetzungen gemäß einem der Ansprüche 1 bis 18, **dadurch gekennzeichnet, dass** das Gemisch der Polyester 5 bis 50, vorzugsweise 5 bis 35 Gewichtsteile des semikristallinen Polyesters mit Methacryloylendgruppen und 50 bis 95, vorzugsweise 65 bis 95 Gewichtsteile des amorphen Polyesters mit Methacryloylendgruppen, bezogen auf das Gesamtgewicht der Polyester, enthält.

20. Zusammensetzungen gemäß einem der Ansprüche 1 bis 19, **dadurch gekennzeichnet, dass** ein Glycidylmethacrylat unter Glycidylmethacrylat und β-Methylglycidylmethacrylat ausgewählt ist.

21. Zusammensetzungen gemäß einem der Ansprüche 1 bis 20, **dadurch gekennzeichnet, dass** sie frei von Vernetzungsmittel und Katalysator sind.

22. Zusammensetzungen gemäß einem der Ansprüche 1 bis 21, **dadurch gekennzeichnet, dass** sie außerdem ein ethylenisch ungesättigtes Oligomer umfassen.

23. Zusammensetzungen gemäß Anspruch 22, **dadurch gekennzeichnet, dass** das ethylenisch ungesättigte Oligomer das Triacrylat oder das Trimethacrylat von Tris-(2-hydroxyethyl)isocyanurat, vorzugsweise das Triacrylat von Tris-(2-hydroxyethyl)isocyanurat ist.

24. Zusammensetzungen gemäß einem der Ansprüche 22 oder 23, **dadurch gekennzeichnet, dass** sie auf 100 Gewichtsteile bis zu 20 Gewichtsteile, vorzugsweise bis zu 10 Gewichtsteile des ethylenisch ungesättigten Oligomers umfassen.

25. Durch ultraviolette Bestrahlung härtbare Zusammensetzungen gemäß einem der Ansprüche 1 bis 24, **dadurch gekennzeichnet, dass** sie außerdem einen Photoinitiator und gegebenenfalls einen Photoaktivator umfassen.

26. Zusammensetzungen gemäß Anspruch 25, **dadurch gekennzeichnet, dass** sie auf 100 Gewichtsteile bis zu 15 Gewichtsteile, vorzugsweise 1,5 bis 8 Gewichtsteile Photoinitiator umfassen.

**27.** Verfahren zur Beschichtung eines Gegenstands, **dadurch gekennzeichnet, dass** man auf besagten Gegenstand durch Aufbringen durch Sprühen mit der elektrostatischen oder triboelektrischen Pistole oder durch Aufbringen im Fließbett eine strahlungshärtbare pulverförmige Zusammensetzung gemäß einem der Ansprüche 1 bis 26 aufträgt, dadurch, dass man die so erhaltene Beschichtung durch Erhitzen auf eine Temperatur von 100 bis 150 °C über eine Dauer von etwa 1 bis 5 Minuten zum Schmelzen bringt, und dadurch, dass man dann besagte Beschichtung in geschmolzenem Zustand ultravioletten Strahlen oder Bündeln beschleunigter Elektronen über eine Dauer, die ausreichend ist, um eine gehärtete Beschichtung zu bilden, aussetzt.

**28.** Durch Bestrahlung mit einem Bündel beschleunigter Elektronen härtbare pulverförmige Lacke und Farben, die aus Zusammensetzungen gemäß einem der Ansprüche 1 bis 24 erhalten werden.

**29.** Durch ultraviolette Bestrahlung härtbare pulverförmige Lacke und Farben, die aus Zusammensetzungen gemäß einem der Ansprüche 1 bis 26 erhalten werden.

**30.** Vollständig oder teilweise mit Lacken und/oder Farben gemäß einem der Ansprüche 27 bis 29 beschichtete Gegenstände.